# EUROPEAN PATENT APPLICATION

(11) **EP 4 598 005 A1**
(43) Date of publication of application: **06.08.2025**
(21) Application number: 23907359.6
(22) Date of filing: 23.10.2023
(51) Int. Cl.: H04N 5/64, F16M 13/02

(54) **STAND FOR DISPLAY APPARATUS AND DISPLAY APPARATUS INCLUDING SAME**

(30) Priority: 22.12.2022 KR 20220182348
(71) Applicant: Samsung Electronics Co., Ltd., Suwon-si, Gyeonggi-do 16677 (KR)
(72) Inventor: PARK, Yonghwan, Suwon-si Gyeonggi-do 16677 (KR); KIM, Minchul, Suwon-si Gyeonggi-do 16677 (KR); YOON, Taeyoun, Suwon-si Gyeonggi-do 16677 (KR); SHIN, Jinyoung, Suwon-si Gyeonggi-do 16677 (KR); HAN, Songhee, Suwon-si Gyeonggi-do 16677 (KR)
(74) Representative: Appleyard Lees IP LLP
(86) International application number: PCT/KR2023/016479
(87) International publication number: WO 2024/136073

(57) **Abstract**

Provided are a stand for a display apparatus and the display apparatus including same. The stand for a display apparatus comprises: a stand body coupled to a display module; a base that is coupled to or separated from the stand body by sliding relative to the stand body and supports the stand body and the display module; and a coupling plate that is provided on the stand body so as to be rotatable between a first position, at which the coupling plate is coupled to the base, and a second position, at which the coupling plate is separated from the base, and that limits the sliding of the base relative to the stand body when at the first position.

## Description

### [TECHNICAL FIELD]

The present disclosure relates to a stand for a display apparatus and the display apparatus including the same.

### [BACKGROUND ART]

A display apparatus is a kind of an output apparatus that converts obtained or stored electrical information into visual information and displays the visual information to a user, and the display apparatus is used in various fields, such as home or workplace.

The display apparatus may include a display module that displays a screen, and a support device that supports the display module. The display module may include a display panel, and a display case that supports the display panel.

The display module may include a self-luminous display panel, such as an organic light-emitting diode (OLED), or a non-self-luminous display panel, such as a liquid crystal display (LCD).

The support device may be provided to support the display module so that a front surface of the display panel, on which the screen is displayed, faces a viewer. When the display module is used by standing it up on the floor, a stand may be used as the support device. In addition, when the display module is used by hanging it on a wall, a wall mount device that is fixed to the wall may be used as the support device.

### [DISCLOSURE]

### [TECHNICAL PROBLEM]

The present disclosure is directed to providing a stand for a display apparatus including an improved structure capable of easily assembling the stand provided to support a display module, and a display apparatus including the same.

The present disclosure is directed to providing a stand for a display apparatus including an improved structure capable of simplifying components of the stand provided to support a display module, and a display apparatus including the same.

The present disclosure is directed to providing a stand for a display apparatus including an improved structure capable of allowing each component of an assembled stand to be firmly fixed to each other, and a display apparatus including the same.

Additional aspects of the disclosure will be set forth in part in the description which follows and, in part, will be obvious from the description, or may be learned by practice of the disclosure.

### [TECHNICAL SOLUTION]

A stand for a display apparatus according to an embodiment of the present disclosure may include: a stand body configured to be coupled to a display module; a base configured to be coupled to or separated from the stand body by sliding relative to the stand body and provided to support the stand body and the display module; and a coupling plate provided in the stand body so as to be rotatable between a first position, at which the coupling plate is coupled to the base, and a second position, at which the coupling plate is separated from the base, and configured to restrict the sliding of the base relative to the stand body in response to the coupling plate being at the first position.

The base may be configured to be coupled to the stand body by sliding in one direction relative to the stand body and configured to be separated from the stand body by sliding in another direction opposite to the one direction relative to the stand body. The coupling plate may be configured to restrict a movement of the base in the another direction relative to the stand body in response to the coupling plate being at the first position.

The base may include an engaging portion provided on one surface of the base facing the coupling plate. The coupling plate may include a sliding-locking portion disposed on a path, along which the engaging portion slides to the another direction, so as to block the engaging portion from sliding in the another direction relative to the coupling plate in response to the coupling plate being at the first position.

The coupling plate may include an opening. The sliding-locking portion may be disposed on an edge of the opening. The engaging portion may protrude from one surface of the base and be provided to allow at least a portion thereof to penetrate the opening in response to the coupling plate being at the first position.

In response to the coupling plate being at the first position, the base may be configured to slide relative to the coupling plate and the stand body between a locking position that restricts a movement of the coupling plate from the first position to the second position and an unlocking position that allows the movement of the coupling plate from the first position to the second position. The engaging portion may be engaged with the coupling plate at the locking position.

In response to the coupling plate being at the first position, the sliding-locking portion may be configured to be engaged with the engaging portion at the locking position and configured to be spaced apart in the one direction from the engaging portion at the unlocking position.

The engaging portion may include a protrusion body protruding from one side of the base, and a flange portion extending outward from one end of the protrusion body. The flange portion may have a diameter greater than a diameter of the protrusion body. The flange portion at the locking position may be engaged with the sliding-locking portion at the first position in a direction different from the one direction.

The coupling plate may further include an engaging groove provided to allow at least a portion of the flange portion to be inserted and engaged at the locking position in response to the coupling plate being at the first position. The engaging groove may be formed by being concavely recessed in the sliding-locking portion.

The base may be configured to be coupled to the stand body by sliding in one direction relative to the stand body. The stand body may include a sliding guide provided to guide the sliding of the base relative to the stand body. The base may include a sliding protrusion formed by protruding from one side of the base. The sliding protrusion may be configured to be insertable into the sliding guide along the one direction.

The sliding protrusion may be engaged with the sliding guide to prevent the base from moving in a direction perpendicular to the one direction relative to the stand body in response to the sliding protrusion being inserted into the sliding guide.

The sliding guide may include a first guide portion in which a width thereof in a direction perpendicular to the one direction becomes less toward a direction in which the sliding protrusion is inserted into the sliding guide in the one direction, and a second guide portion extending from the first guide portion to a direction in which the sliding protrusion is inserted in the one direction and having a constant width in the direction perpendicular to the one direction.

The sliding protrusion may include a body portion extending from the base to penetrate the sliding guide, and a head portion provided on one side of the body portion in a direction extending from the base. The head portion may have a width wider than the second guide portion in the direction perpendicular to the one direction.

The coupling plate may include a magnetic body. The magnetic body may be provided to allow the coupling plate to be fixed to the base by magnetic force between the magnetic body and the base in response to the coupling plate being at the first position.

The stand body may include a coupling portion configured to be coupled to the base. The coupling plate may be rotatably coupled to the coupling portion.

The coupling portion may cover a portion of the base. The coupling plate may cover another portion of the base in response to the coupling plate being at the first position.

A stand for a display apparatus according to an embodiment of the present disclosure, which is for supporting a display module, may include: a base; a stand body configured to be coupled to the display module and including a coupling portion configured to be coupled to or separated from the base in a sliding manner; and a coupling plate configured to be rotatable relative to the coupling portion and configured to restrict a movement of the base relative to the stand body at a position where the coupling plate is engaged with and fixed to the coupling portion.

The coupling plate may include a hook configured to be engaged with the coupling portion. The coupling portion may include an insertion groove into which at least a portion of the hook is inserted to prevent the rotation of the coupling plate.

The coupling plate may include an opening. The base may include an engaging portion protruding from one side of the base. The engaging portion may penetrate the opening to prevent the base from sliding relative to the coupling plate in response to the coupling plate being engaged with the coupling portion.

The base may be configured to be coupled to the coupling portion by sliding one direction relative to the coupling portion. The coupling portion may include a sliding guide provided to guide the sliding of the base relative to the coupling portion. The base may include a sliding protrusion configured to be insertable into the sliding guide along the one direction.

A display apparatus according to an embodiment of the present disclosure may include: a display module; and a stand provided to support the display module. The stand includes: a base; a stand body coupled to the display module and the base, respectively, so as to connect the display module and the base; and a coupling plate configured to be movable between a first position that locks the base from sliding in one direction relative to the stand body and a second position that unlocks the sliding of the base in the one direction relative to the stand body, and configured to couple the stand body and the base in response to the coupling plate being at the first position.

### [ADVANTAGEOUS EFFECTS]

A stand for a display apparatus may be easily assembled by sliding a stand body and a base without a separate fastening process, and components of the stand may be simplified.

A stand for a display apparatus may be easily assembled into a stand body and a base using a coupling plate, and components of the stand may be simplified.

A stand for a display apparatus may restrict a movement of a stand body and a base relative to each other by using a coupling plate, and may firmly fix each component.

Additional aspects of the disclosure will be set forth in part in the description which follows and, in part, will be obvious from the description, or may be learned by practice of the disclosure.

### [DESCRIPTION OF DRAWINGS]

FIG. 1 is a view illustrating a display apparatus according to one embodiment of the present disclosure.
FIG. 2 is a rear view of the display apparatus according to one embodiment of the present disclosure.
FIG. 3 is an exploded view of a control device of the display apparatus according to one embodiment of the present disclosure.
FIG. 4 is an exploded view of some components of the display apparatus according to one embodiment of the present disclosure.
FIG. 5 is an exploded view of some components of a stand of the display apparatus according to one embodiment of the present disclosure.
FIG. 6 is an enlarged view of some components of the stand of the display apparatus according to one embodiment of the present disclosure.
FIG. 7 is an enlarged view of some components of the stand of the display apparatus according to one embodiment of the present disclosure.
FIG. 8 is a view illustrating a state in which the stand of the display apparatus according to one embodiment of the present disclosure is assembled.
FIG. 9 is an enlarged view of some components of the stand of the display apparatus according to one embodiment of the present disclosure.
FIG. 10 is a view illustrating the stand of the display apparatus according to one embodiment of the present disclosure.
FIG. 11 is a view illustrating a state before the stand is assembled to a display module.
FIG. 12 is an enlarged view of part A in FIG 11.
FIG. 13 is a cross-sectional view taken along line B-B' of FIG 12.
FIG. 14 is a view illustrating a state in which a base is moved relative to a stand body and a coupling plate in the stand of FIG. 12.
FIG. 15 is a cross-sectional view taken along line C-C' of FIG 14.
FIG. 16 is an enlarged cross-sectional view of a portion of a stand in a display apparatus according to one embodiment of the present disclosure.
FIG. 17 is an enlarged cross-sectional view of a portion of a stand in a display apparatus according to one embodiment of the present disclosure.
FIG. 18 is an enlarged view of some components of a stand of a display apparatus according to one embodiment of the present disclosure.
FIG. 19 is an enlarged view of some components of the stand of the display apparatus according to one embodiment of the present disclosure.
FIG 20 is an enlarged cross-sectional view taken along line D-D' of FIG 19.

### [MODES OF THE INVENTION]

Embodiments described in the disclosure and configurations shown in the drawings are merely examples of the embodiments of the disclosure, and may be modified in various different ways at the time of filing of the present application to replace the embodiments and drawings of the disclosure.

In addition, the same reference numerals or signs shown in the drawings of the disclosure indicate elements or components performing substantially the same function.

Also, the terms used herein are used to describe the embodiments and are not intended to limit and/or restrict the disclosure. The singular forms "a," "an" and "the" are intended to include the plural forms as well, unless the context clearly indicates otherwise. In this disclosure, the terms "including", "having", and the like are used to specify features, numbers, steps, operations, elements, components, or combinations thereof, but do not preclude the presence or addition of one or more of the features, numbers, steps, operations, elements, components, or combinations thereof.

It will be understood that, although the terms first, second, third, etc., may be used herein to describe various elements, but elements are not limited by these terms. These terms are only used to distinguish one element from another element. For example, without departing from the scope of the disclosure, a first element may be termed as a second element, and a second element may be termed as a first element. The term of "and/or" includes a plurality of combinations of relevant items or any one item among a plurality of relevant items.

Meanwhile, the terms "up and down direction", "lower side", and "front and rear direction" used in the following description are defined based on the drawing, and the shape and position of each component are not limited by these terms. For example, the terms "front" and "rear" below may mean front and rear in the X direction based on the drawing, respectively. The terms "upper" and "lower" below may mean upper and lower in the Z direction based on the drawing, respectively. The terms "up and down direction" below may mean the Z direction based on the drawing, and "horizontal direction" may mean the X direction or the Y direction or all directions along the X-Y plane based on the drawing.

The disclosure will be described more fully hereinafter with reference to the accompanying drawings.

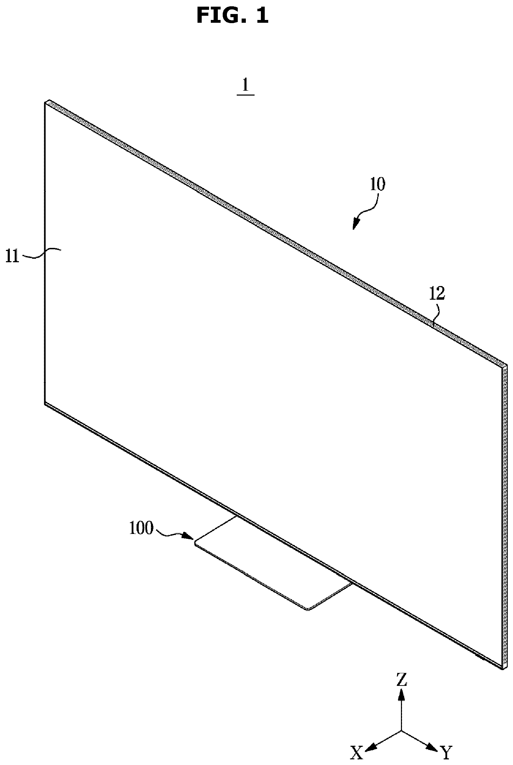

FIG. 1 is a view illustrating a display apparatus according to one embodiment of the present disclosure.

Referring to FIG. 1, a display apparatus 1 according to one embodiment of the present disclosure may include a display module 10 and a stand 100. The stand 100 may be provided to support the display module 10. The display module 10 may be supported on a floor surface by the stand 100.

The display module 10 is a device that processes an image signal received from an outside and visually displays the processed image. Hereinafter a case in which the display module 10 is a television is exemplified, but the present disclosure is not limited thereto. For example, the display module 10 may be implemented in various forms, such as a monitor, a portable multimedia device, and a portable communication device, which are a type of computer output device, and the display module 10 is not limited in its shape as long as visually displaying an image.

FIG. 1 illustrates a flat display module with a flat screen as an example of the display module 10, but the present disclosure is not limited thereto. Therefore, the display module according to the present disclosure may be applied to a curved display module or a bendable or flexible display module in which a flat state and a curved state are variable. Further, a configuration of the present disclosure may be applied to a display module of various shapes regardless of a screen size or ratio of the display module.

The display module 10 may receive content data including video signals and audio signals from various content sources, and output video and audio corresponding to the video signals and the audio signals. For example, the display module 10 may receive content data through a broadcast reception antenna or cable, receive content data from a content playback device, or receive content data from a content providing server of a content provider.

The display module 10 may display an image corresponding to video data and output sound corresponding to audio data. For example, the display apparatus 1 may restore a plurality of image frames included in video data and continuously display the plurality of image frames. Further, the display module 10 may restore an audio signal included in the audio data and continuously output sound according to the audio signal.

The display module 10 may be configured to display a screen. Particularly, the display module 10 may include a display panel 11 that displays an image in the front (front side in the X direction based on the drawing).

A plurality of pixels may be formed on the display panel 11. A screen displayed on the display panel 11 may be formed by a combination of light emitted from the plurality of pixels. For example, a single screen may be formed by combining light emitted from the plurality of pixels as a mosaic.

Each of the plurality of pixels may emit different brightness and different color of light. Particularly, the plurality of pixels may include sub-pixels, respectively, and the sub-pixels may include a red sub pixel emitting red light, a green sub pixel emitting green light, and a blue sub pixel emitting blue light. By combining the red light of the red sub pixel, the green light of the green sub pixel, and the blue light of the blue sub pixel, each of the plurality of pixels may emit different brightness and different color of light.

The display panel 11 may have a substantially rectangular shape. Particularly, the display panel 11 may have a shape in which a length of the horizontal side and a length of the vertical side are different from each other. That is, the display panel 11 may be provided to have a long side and a short side. The display panel 11 may be provided in a rectangular plate shape. However, the present disclosure is not limited thereto, and the display panel 11 may be provided in the shape of a square plate in which the lengths of the long and short sides are approximately equal.

The display panel 11 may be provided in various sizes. The ratio between the long side and the short side of the display panel 11 is not limited to general cases such as 16:9 and 4:3, but may be provided at any ratio.

For example, the display panel 11 may be composed of a non-self- luminous display such as a liquid crystal display (LCD).

When the display panel 11 is an LCD panel, the display panel 11 may include a thin film transistor substrate in which thin film transistors (TFTs) are formed in a matrix form, a color filter substrate coupled in parallel with the thin film transistor substrate, and a liquid crystal injected between the thin film transistor substrate and the color filter substrate and having optical properties that vary depending on changes in voltage or temperature.

The non-self-luminous display module 10 may include a backlight unit (BLU) (not shown). The backlight unit may be configured to emit light toward the display panel 11 from the rear of the display panel 11. In this case, the display panel 11 may block or transmit light emitted from the backlight unit.

However, the type of display panel in the display apparatus according to the present disclosure is not limited thereto, and the display panel 11 may be composed of a self-luminous display type panel such as an organic light-emitting diode (OLED) or a micro-LED.

A cable (not shown) configured to transmit image data to the display panel 11, and a display driver integrated circuit (DDI) (not shown) configured to process digital image data and output an analog image signal may be provided at one side of the display panel 11.

The display module 10 may include a display case 12 supporting the display panel 11. The display case 12 may support a front surface, side surface, or rear surface of the display panel 11. The display case 12 may form the outer shape of the display module 10. Components for displaying images or performing various functions of the display module 10, such as the display panel 11, may be accommodated inside the display case 12.

FIG. 1 illustrates that the display case 12 has a flat plate shape, but the shape of the display case in the display apparatus according to the present disclosure is not limited thereto. For example, the display case may have a curved plate shape corresponding to the shape of the display panel. Alternatively, the display case may be provided to allow the flat state and the curved state to be changed, and thus may be applied to a bendable or flexible display apparatus.

The display case 12 may include a top chassis supporting front and side surfaces of the display panel 11, a bottom chassis that is positioned at the rear of the display panel 11, and a rear cover that is coupled to the rear of the bottom chassis to form a rear surface of the display module 10.

The display case 12 may include the top chassis supporting the front and side surfaces of the display panel 11. The top chassis may be provided in a quadrangle frame shape on the front of the display apparatus 1. The top chassis may form a bezel that is arranged to face the front of the display apparatus 1 to support the front of the display panel 11. However, when the display module 10 is a bezel-less type display module with a very narrow bezel or no bezel, the top chassis may be provided to support only the side surface of the display panel 11. Further, when the bottom chassis supports the side surface of the display panel 11, the display module 10 may not include the top chassis.

The display module 10 may include the bottom chassis supporting the rear side of the display panel 11. The bottom chassis may cover the rear side of the display panel 11. The bottom chassis may be coupled to the rear side of the top chassis. The bottom chassis may support various components of the display module 10, such as a backlight unit, a printed circuit board assembly (PBA) on which various electronic components are mounted, and the like. The bottom chassis may be formed to have a substantially flat plate shape, but is not limited thereto. The bottom chassis may be configured to include a material having high thermal conductivity so as to dissipate heat generated inside the display module 10 to the outside. For example, the bottom chassis may be configured to include a metal material such as aluminum or SUS, or a plastic material such as ABS.

When the backlight unit is provided in the display module 10, the bottom chassis may be disposed at the rear of the backlight unit. The display case 12 may include a middle mold disposed between the top chassis and the bottom chassis, and the middle mold may be provided to support the backlight unit.

The display module 10 may include the rear cover forming the rear exterior of the display apparatus 1. The rear cover may be disposed at the rear of the bottom chassis and may cover the bottom chassis and various components mounted at the rear of the bottom chassis.

Meanwhile, unlike FIG. 1, the display case of the display apparatus according to the present disclosure may not include some of the components of the top chassis, the middle mold, and the bottom chassis. For example, the display panel of the display apparatus according to the present disclosure may be a self-luminous display panel such as an OLED panel, and in this case, because the display apparatus is not provided with a backlight unit, the middle mold for supporting the backlight unit may not be provided either.

The configuration of the display module 10 described above with reference to FIG. 1 is merely an example for describing the display module of the display apparatus according to the present disclosure, and the present disclosure is not limited thereto. The display module of the display apparatus according to the present disclosure may be provided to include various configurations for performing a function of displaying a screen.

The stand 100 of the display apparatus 1 may be provided to support the display module 10. The stand 100 may be disposed on a floor surface to support the display module 10, and the display module 10 may be supported on the floor surface by the stand 100. That is, the display module 10 may be supported in a standing manner by the stand 100.

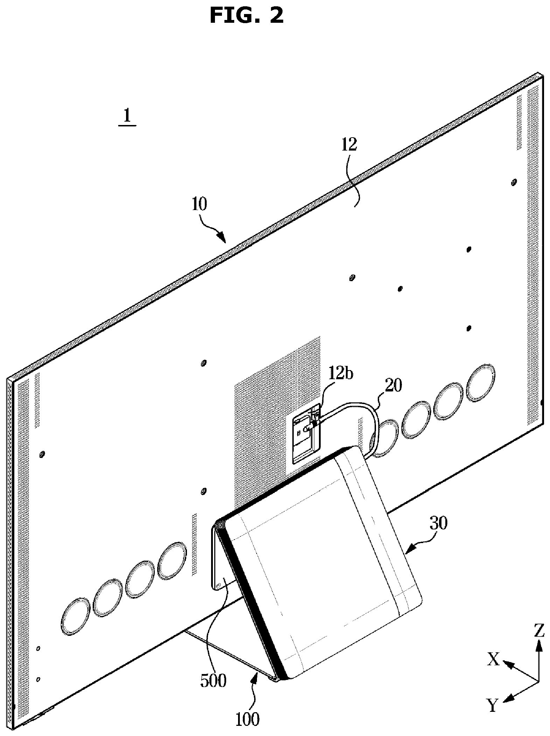

The stand 100 may be coupled to the display module 10. For example, as shown in FIGS. 1 and 2, the stand 100 may be coupled to the rear surface of the display module 10 and may support the rear side of the display module 10. The rear surface of the display module 10 means the rear cover of the display case 12.

Specific features of the stand 100 are described below.

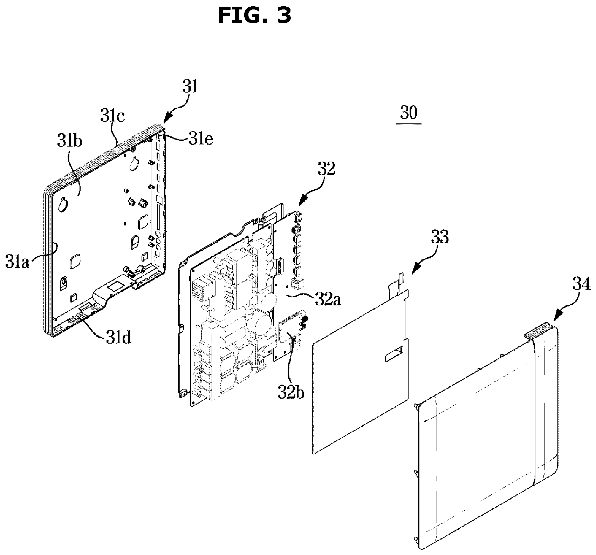

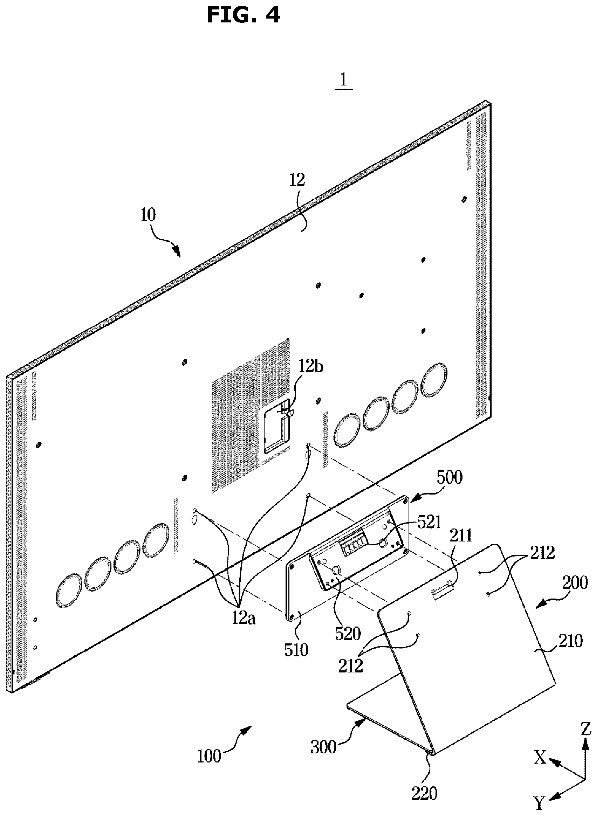

FIG. 2 is a rear view of the display apparatus according to one embodiment of the present disclosure. FIG. 3 is an exploded view of a control device of the display apparatus according to one embodiment of the present disclosure. FIG. 4 is an exploded view of some components of the display apparatus according to one embodiment of the present disclosure.

Referring to FIGS. 2 to 4, the display apparatus 1 may include a control device 30. The control device 30 may be configured to perform various functions, such as providing a content signal to the display module 10 or supplying power to the display module 10.

The control device 30 may be electrically connected to the display module 10. For example, the control device 30 may receive content signals from various content sources and transmit the content signals to the display module 10. For example, the control device 30 may receive power from an external power source and supply power to the display module 10.

As illustrated in FIG. 2, the control device 30 may be electrically connected to the display module 10 via a cable 20. The cable 20 may be connected to the display module 10 via a cable connecting portion 12b of the display module 10. The cable connecting portion 12b may include an input terminal to which the cable 20 is connected, and the display module 10 may receive an electrical signal received from the control device 30 or power supplied from the control device 30 via the input terminal of the cable connecting portion 12b. For example, the cable connecting portion 12b may be provided on the rear cover of the display case 12.

The control device 30 may be formed to have a substantially hexahedron box shape. The control device 30 may include a control device body 31 having an open shape on one side, a main board 32 accommodated in the control device body 31, and a control device cover 34 covering one surface of the control device body 31.

The control device body 31 may include a surface 31b formed in a plate shape, and a rim 31c formed along an edge of the surface 31b. The rim 31c of the control device body 31 may be formed approximately perpendicular to a surface of the control device body 31. In the control device body 31, an accommodation space for accommodating the main board 32 may be formed by the surface 31b and the rim 31c.

The control device body 31 may include an opening 31a formed on a surface opposite to the surface 31b of the control device body 31. The opening 31a of the control device body 31 may be covered by the control device cover 34.

The control device 30 may include a plurality of cooling holes 31d formed to allow heat generated by the main board 32 to be discharged to the outside of the control device body 31. The plurality of cooling holes 31d may be formed on at least one surface of the rim 31c of the control device body 31.

The control device 30 may include at least one porthole 31e provided to allow the cable 20 to be connected. The porthole 31e may be formed on at least one surface of the rim 31c of the control device body 31.

The control device 30 may include a terminal connected to a connector (not shown) of the cable 20a and/or a terminal connected to a power cable (not shown) which are provided to correspond to the porthole 31e of the control device body 31.

The main board 32 may be disposed inside the control device 30. The main board 32 may be provided with at least one substrate 32a and an input terminal 32b provided on the at least one substrate 32a. Various components such as a light source driver, a power driver, a transceiver, and a temperature sensor may be provided inside the control device 30.

The control device 30 may include a heat dissipation sheet 33. The heat dissipation sheet 33 may be provided on the inner side of the control device cover 34. The heat dissipation sheet 33 is provided so as to efficiently dissipate heat generated from the main board 32 or the substrate 32a. The heat dissipation sheet 33 may include a high thermal conductivity radiation sheet or a thin metal plate. For example, the heat dissipation sheet 33 may be provided to include a PET material. The heat dissipation sheet 33 may be provided with an adhesive on at least one surface thereof. The heat dissipation sheet 33 provided with an adhesive may be adhered to one surface of the control device cover 34.

The control device 30 described above is only an example of the control device included in the display apparatus according to the present disclosure, and the present disclosure is not limited thereto.

As illustrated in FIG. 2, the control device 30 may be supported on the stand 100. That is, the control device 30 may be supported on the stand 100 by being detachably mounted on the stand 100 rather than being disposed separately from the display apparatus 1. In this case, the control device 30 may be covered by the stand 100 when viewed from the front (the X direction), and the cable 20 connecting the control device 30 and the display module 10 may also be covered by the display module 10 when viewed from the front. In this case, the appearance quality provided to a user when the display apparatus 1 is installed in a use space may be improved.

Particularly, the control device 30 may be coupled to a stand body 200 of the stand 100 to be described later. For example, the control device 30 may be removably mounted on the stand body 200 by various methods. For example, the control device 30 may be fixed to the stand body 200 by screw fastening, etc. The present disclosure is not limited thereto, and the control device 30 may be mounted on the stand body 200 by various methods.

For example, the stand body 200 may be formed to have a size corresponding to or at least larger than that of the control device 30.

For example, the stand body 200 may be positioned to have a predetermined inclination with respect to the ground to allow the control device 30 to be stably supported. The predetermined inclination may mean an angle less than 90 degrees with respect to the ground.

However, the present disclosure is not limited thereto, and the control device 30 may not be mounted on the stand 100, but may be separately placed on the floor surface or other installation space. In addition, the display apparatus 1 according to one embodiment of the present disclosure has been described based on the assumption that the display apparatus 1 includes the control device 30. Alternatively, the display apparatus according to the present disclosure may not include the above-mentioned control device.

The stand 100 of the display apparatus 1 may include the stand body 200 and a base 300. The stand body 200 may support the display module 10 to allow the display module 10 to stand relative to the floor surface. The stand body 200 may be provided to allow the display module 10 to be positioned spaced apart from the floor surface by a predetermined height. The base 300 may be supported on the floor surface. The base 300 may be provided so as to support the stand body 200 and the display module 10.

The base 300 may be formed to have a substantially flat plate shape so as to be stably placed on the floor surface.

The stand body 200 may be provided to be coupled to the display module 10. The stand body 200 may be coupled to the display module 10 and the base 300, respectively, to connect the display module 10 and the base 300. Particularly, the stand body 200 may be provided to be coupled to the rear surface of the display module 10, that is, the rear cover of the display case 12.

For example, the stand 100 may further include a support bracket 500 for coupling the stand body 200 to the display module 10.

The support bracket 500 may include a case coupling portion 510 provided to be coupled to the display module 10 and a stand coupling portion 520 provided to be coupled to the stand body 200. Particularly, the case coupling portion 510 may be provided to be coupled to the rear cover of the display case 12. In addition, the stand coupling portion 520 may be provided to be coupled to a support plate 210 of the stand body 200, which will be described later. The case coupling portion 510 and the stand coupling portion 520 may be connected to each other.

For example, a bracket fastening hole 12a may be provided in the rear cover of the display case 12. The case coupling portion 510 may be fastened to the display case 12 by a screw (not shown) penetrating the bracket fastening hole 12a. However, the present disclosure is not limited thereto, and the case coupling portion 510 may be fastened to the display case 12 by various methods.

For example, the support plate 210 of the stand body 200 may include a bracket coupling hook 211. The stand coupling portion 520 may include a hook structure 521 formed to be interlocked with the bracket coupling hook 211, and the stand coupling portion 520 and the stand body 200 may be coupled by the bracket coupling hook 211 and the hook structure 521 of the stand coupling portion 520.

In addition, a screw hole 212 may be provided in the support plate 210 of the stand body 200. A hole corresponding to the screw hole 212 may be formed in the stand coupling portion 520. The stand coupling portion 520 and the stand body 200 may be fastened by a screw penetrating the screw hole 212.

However, the present disclosure is not limited thereto, and the stand body 200 and the stand coupling portion 520 may be coupled in various ways.

The stand body 200 may be arranged to have a predetermined inclination with respect to the floor surface as described above. However, because the rear cover of the display module 10 generally is arranged in a direction perpendicular to the ground, it may not be easy for the stand body 200 to be directly coupled to the display module 10. In the support bracket 500, the case coupling portion 510 may be provided parallel to the rear cover of the display module 10, and the stand coupling portion 520 may be provided parallel to the support plate 210 of the stand body 200. That is, the support bracket 500 may be formed to allow the case coupling portion 510 and the stand coupling portion 520 to have a predetermined angle.

For example, the case coupling portion 510 may be formed to have a substantially flat plate shape. For example, the stand coupling portion 520 may be formed to have a substantially flat plate shape. Alternatively, the support bracket 500 may have various shapes depending on the shapes of the stand body 200 and the display case 12.

As the stand body 200 is connected to the display module 10 via the support bracket 500, the stand body 200 may be supported more stably on the display module 10.

However, the present disclosure is not limited thereto, and the stand body 200 may be configured to be directly coupled to the display module 10.

The stand body 200 and the base 300 may be configured to be coupled to each other. The stand body 200 and the base 300 may be removably coupled to each other. The stand body 200 and the base 300 may be configured to be coupled to each other so as to support the display module 10 in a standing manner.

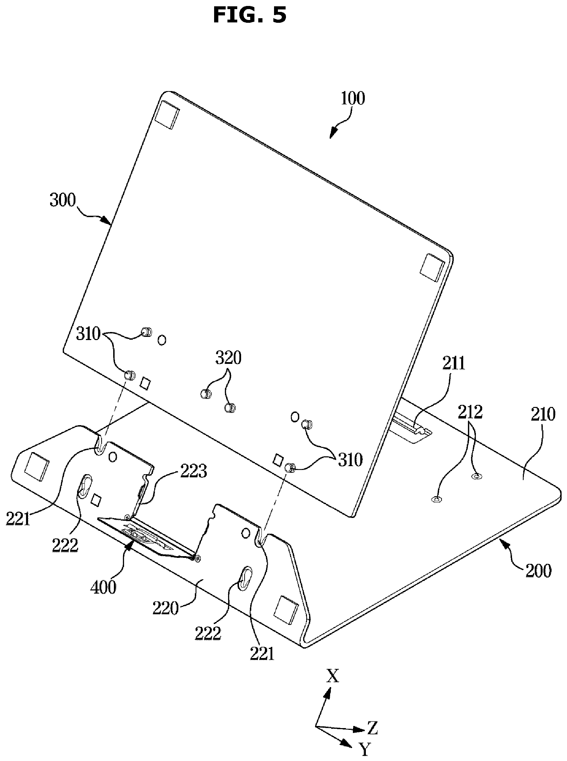

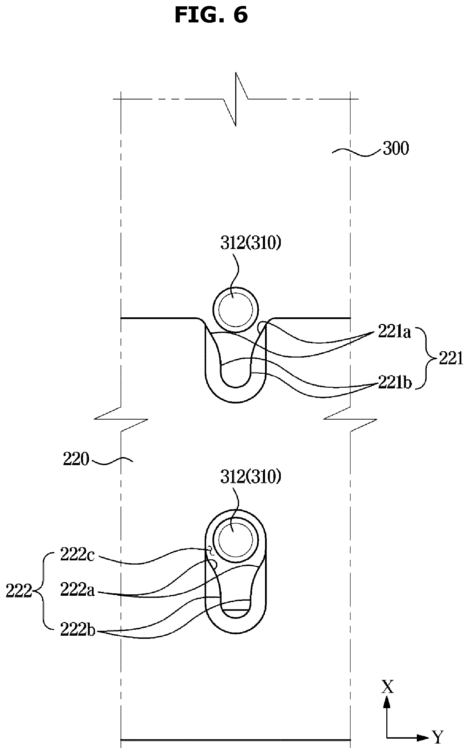

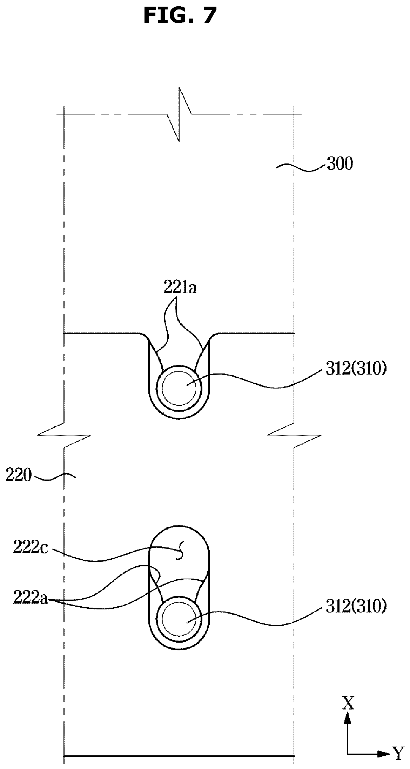

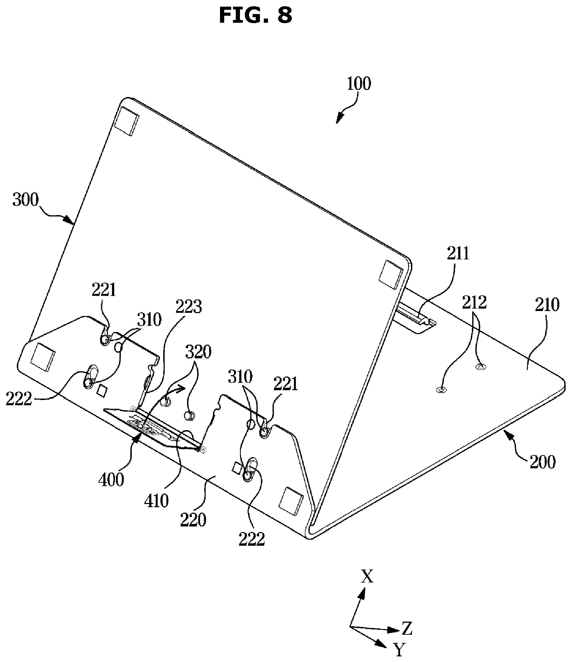

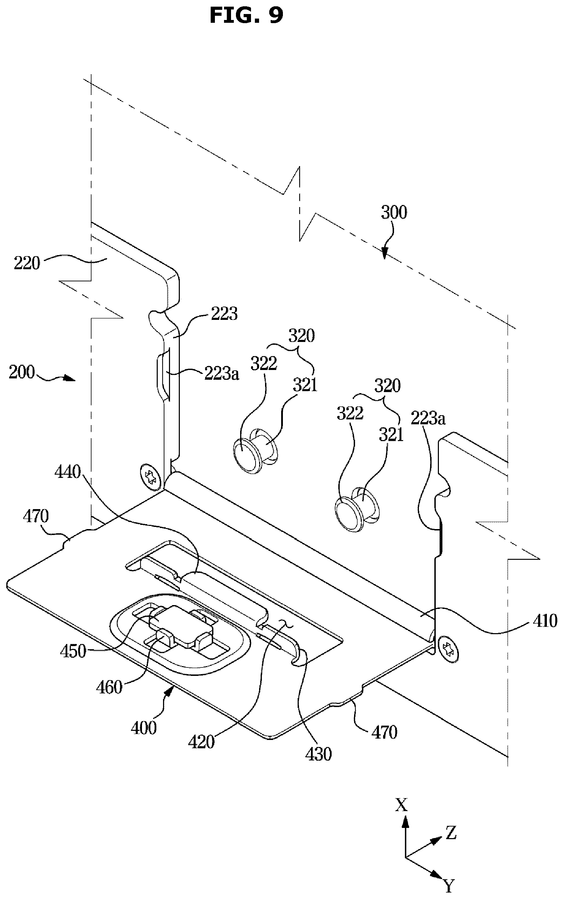

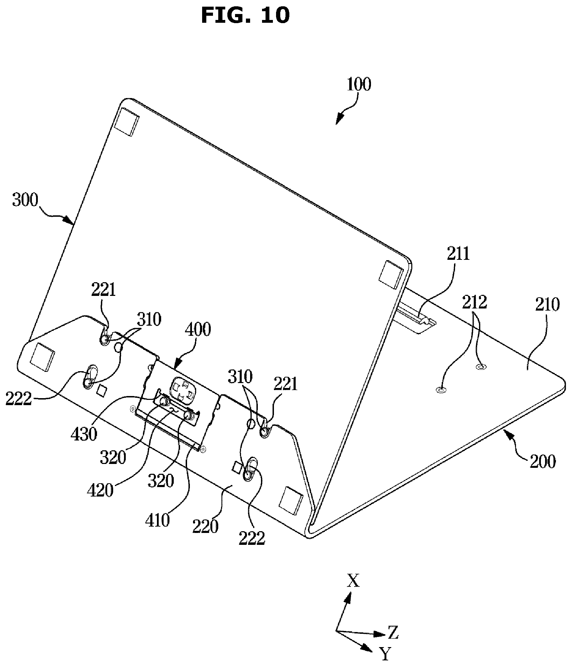

FIG. 5 is an exploded view of some components of a stand of the display apparatus according to one embodiment of the present disclosure. FIG. 6 is an enlarged view of some components of the stand of the display apparatus according to one embodiment of the present disclosure. FIG. 7 is an enlarged view of some components of the stand of the display apparatus according to one embodiment of the present disclosure. FIG. 8 is a view illustrating a state in which the stand of the display apparatus according to one embodiment of the present disclosure is assembled. FIG. 9 is an enlarged view of some components of the stand of the display apparatus according to one embodiment of the present disclosure. FIG. 10 is a view illustrating the stand of the display apparatus according to one embodiment of the present disclosure.

Referring to FIGS. 5 to 10, the stand body 200 and the base 300 may be detachably coupled to each other.

As illustrated in FIGS. 5 to 10, the stand 100 for the display apparatus according to one embodiment of the present disclosure may be transported to a user with the stand body 200 and base 300 separated from each other, thereby improving the convenience of transporting the product.

Meanwhile, the stand 100 may be provided in such a way that a process of assembling the stand body 200 and the base 300 is required after being transported to a user, and thus the convenience of assembly may be required. In addition, it may be required to transport the stand 100 again after the assembly process, and thus convenience of a process of separating the stand body 200 and the base 300, which are already assembled, again may also be required.

The stand body 200 and the base 300 may be provided to be coupled in a sliding manner. Particularly, the stand body 200 may include a coupling portion 220 provided to be coupled to the base 300, and the base 300 may be provided to be coupled to the coupling portion 220 in a sliding manner.

The stand body 200 may include the support plate 210 coupled to the display module 10, and the coupling portion 220 connected to the support plate 210 and coupled to the base 300. The coupling portion 220 may be arranged parallel to the base 300, and may be arranged parallel to the floor surface. The stand body 200 may be formed to allow the support plate 210 and the coupling portion 220 to have a predetermined angle.

The coupling portion 220 may be provided at a lower portion of the stand body 200. The base 300 may be coupled to the lower portion of the stand body 200.

For example, the base 300 may be coupled to the coupling portion 220 from the upper side in the Z direction. That is, the base 300 and the coupling portion 220 may be coupled in such a way that a lower surface of the base 300 faces an upper surface of the coupling portion 220.

The support plate 210 may be formed to have a substantially flat plate shape. The coupling portion 220 may be formed to have a substantially flat plate shape. The coupling portion 220 may be formed to be bent and extended from one end of the support plate 210. The one end of the support plate 210 may mean one end, which is adjacent to the floor surface between two ends in the Z direction, of the support plate 210 i.e., a lower end.

The support plate 210 and the coupling portion 220 may be formed integrally. For example, the stand body 200 may be formed by bending and processing a portion corresponding to the coupling portion 220 from a flat plate-shaped base material. However, the present disclosure is not limited thereto, and the support plate 210 and the coupling portion 220 may also be formed as separate components.

The stand body 200 may be composed of various materials having sufficient rigidity to support the display module 10, such as a metal alloy.

Hereinafter an example of a configuration in which the coupling portion 220 of the standing body 200 and the base 300 are coupled in a sliding manner is described.

As illustrated in FIGS. 5 to 7, the base 300 may be configured to slide in one direction relative to the stand body 200 and be coupled to the stand body 200. According to FIGS. 5 to 7, the base 300 may be configured to slide along the X direction relative to the stand body 200, and one direction in which the base 300 moves when coupled to the stand body 200 may be a direction opposite to the X direction based on the drawing (in other words, a direction opposite to a direction indicated by the X direction based on the drawing). The X direction may be a front and rear direction of the stand 100 and the display apparatus 1, and the one direction, in which the base 300 moves when coupled to the stand body 200, may be a rearward direction of the stand 100 and the display apparatus 1.

However, the present disclosure is not limited thereto, and the base 300 may be configured to slide in various directions, such as the Y direction, with respect to the stand body 200, and be coupled to the stand body 200.

For convenience of description, the following description will be based on one embodiment in which the base 300 is configured to slide in the X direction on the drawing relative to the stand body 200 and configured to slide in the direction opposite to the X direction so as to be coupled to the stand body 200.

The stand body 200 may include sliding guides 221 and 222 provided to guide the sliding of the base 300 with respect to the stand body 200. The sliding guides 221 and 222 may be provided at the coupling portion 220.

The base 300 may include a sliding protrusion 310. The sliding protrusion 310 may be formed to protrude from one side of the base 300. The sliding protrusion 310 may be formed to correspond to the sliding guides 221 and 222.

The sliding protrusion 310 may be formed on one surface of the base 300 facing the coupling portion 220. For example, the sliding protrusion 310 may be formed on the lower surface of the base 300 and may be formed to protrude downward.

The sliding guides 221 and 222 may be provided to guide the sliding protrusion 310 to slide along the X direction (hereinafter referred to as "a direction opposite to the one direction") or the direction opposite to the X direction (hereinafter referred to as "the one direction"). The sliding protrusion 310 may be provided to be insertable into the sliding guides 221 and 222 along the one direction. When the sliding protrusion 310 is inserted into the sliding guides 221 and 222 along the one direction, the base 300 may be coupled to the coupling portion 220. The sliding protrusion 310 may be provided to be detachable from the sliding guides 221 and 222 by moving along the direction opposite to the one direction with respect to the sliding guides 221 and 222. When the sliding protrusion 310 is separated from the sliding guides 221 and 222 in the direction opposite to the one direction, the base 300 may be separated from the coupling portion 220.

For example, the sliding guides 221 and 222 may be formed to have the shape of a hole through which the coupling portion 220 passes. Particularly, the sliding guides 221 and 222 may be formed to have the shape of a hole through which the coupling portion 220 passes in the Z direction.

The sliding guides 221 and 222 may be provided in plurality. The sliding protrusion 310 may be provided in multiple numbers to correspond to the number of sliding guides 221 and 222.

Particularly, the sliding guides 221 and 222 may include a first sliding guide 221 and a second sliding guide 222. Some of the plurality of sliding protrusions 310 may be provided to correspond to the first sliding guide 221, and other some of the plurality of sliding protrusions 310 may be provided to correspond to the second sliding guide 222. In other words, the first sliding guide 221 may be provided to guide the sliding of some of the plurality of sliding protrusions 310, and the second sliding guide 222 may be provided to guide the sliding of other some of the plurality of sliding protrusions 310. Some of the plurality of sliding protrusions 310 may be provided to be inserted in the one direction into the first sliding guide 221, and other some of the plurality of sliding protrusions 310 may be provided to be inserted in the one direction into the second sliding guide 222.

For example, the first sliding guide 221 may be provided at the other end, which is opposite to one end adjacent to the support plate 210, of the coupling portion 220. The second sliding guide 222 may be provided between one end, which is adjacent to the support plate 210, of the coupling portion 220, and the other end opposite to the one end. In this case, the first sliding guide 221 may be positioned forward in the X direction relative to the second sliding guide 222.

The first sliding guide 221 and the second sliding guide 222 may be arranged parallel to each other along one direction. That is, the first sliding guide 221 and the second sliding guide 222 may be arranged parallel to each other along the front and rear direction parallel to the X direction. However, the present disclosure is not limited thereto, and the first sliding guide 221 and the second sliding guide 222 may be arranged in various ways.

The first sliding guide 221 may include a first guide portion 221a and a second guide portion 221b. The first guide portion 221a and the second guide portion 221b may each be provided to guide the sliding of the sliding protrusion 310.

When the sliding protrusion 310 slides in the one direction and is inserted into the first sliding guide 221, the sliding protrusion 310 may move sequentially along the first guide portion 221a and the second guide portion 221b. The second guide portion 221b may be positioned in the one direction with respect to the first guide portion 221a.

The second guide portion 221b may extend in a direction in which the sliding protrusion 310 is inserted in the one direction from the first guide portion 221a. Particularly, the second guide portion 221b may extend in the one direction (rearwardly, based on the drawing) from one end of the first guide portion 221a (rear end of the first guide portion 221a based on the drawing).

The first guide portion 221a may be formed to allow an end opposite to the second guide portion 221b to be open in the one direction. The second guide portion 221b may be formed to allow an end opposite to the first guide portion 221a to be closed in the one direction. That is, the first sliding guide 221 may be formed in such a way that one of two ends parallel to the one direction is open and the other end is closed. The sliding protrusion 310 may move in the one direction and enter the first guide portion 221a, and when the sliding protrusion 310 reaches the end of the second guide portion 221b opposite to the first guide portion 221a, the insertion of the sliding protrusion 310 into the first sliding guide 221 may be completed.

The first guide portion 221a may be formed to allow a width in the direction perpendicular to the one direction to become less toward the direction in which the sliding protrusion 310 is inserted into the first sliding guide 221 in the one direction. The width in the direction perpendicular to the one direction may mean a width in the Y direction based on the drawing. When the sliding protrusion 310 is inserted while moving along the first guide portion 221a, the sliding protrusion 310 may be guided to move toward the approximate center of the first sliding guide 221.

The second guide portion 221a may be formed to allow a width in the direction perpendicular to the one direction to be approximately constant. The width in the direction perpendicular to the one direction may mean a width in the Y direction based on the drawing.

With this configuration, a width of an entrance portion of the first sliding guide 221 in which the sliding protrusion 310 begins to be inserted may be formed to be greater than an average width of the first sliding guide 221 or a width of an inner portion of the first sliding guide 221. Accordingly, when a user positions the sliding protrusion 310 at the entrance portion of the first sliding guide 221 to insert the sliding protrusion 310 into the first sliding guide 221, the convenience may be improved.

However, the present disclosure is not limited thereto, and the first sliding guide 221 may be formed to have various shapes for guiding the sliding protrusion 310.

The second sliding guide 222 may include a first guide portion 222a, a second guide portion 222b, and a guide entrance 222c. The sliding protrusion 310 may enter or exit the second sliding guide 222 through the guide entrance 222c. In a process of inserting the sliding protrusion 310 into the second sliding guide 222, the guide entrance 222c may be an initial position at which the sliding protrusion 310 enters the second sliding guide 222. The first guide portion 222a and the second guide portion 222b may be provided to guide the sliding of the sliding protrusion 310, respectively.

When the sliding protrusion 310 is inserted into the second sliding guide 222 while sliding in the one direction, the sliding protrusion 310 may move sequentially along the guide entrance 222c, the first guide portion 222a, and the second guide portion 222b. The first guide portion 222a may be disposed in the one direction with respect to the guide entrance 222c. The second guide portion 222b may be disposed in the one direction with respect to the first guide portion 222a.

The first guide portion 222a may extend in a direction, in which the sliding protrusion 310 is inserted in the one direction, from the guide entrance 222c. Particularly, the first guide portion 222a may extend in the one direction (rearwardly, based on the drawing) from one end of the guide entrance 222c (rear end of the guide entrance 222c based on the drawing).

The second guide portion 222b may extend from the first guide portion 222a in a direction in which the sliding protrusion 310 is inserted in the one direction. Particularly, the second guide portion 222b may extend in the one direction (rearwardly, based on the drawing) from one end of the first guide portion 222a (rear end of the first guide portion 222a based on the drawing).

The guide entrance 222c may be formed to allow an end opposite to the first guide portion 222a to be blocked in the one direction. The second guide portion 222b may be formed to allow the end opposite to the first guide portion 222a to be blocked in the one direction. That is, the second sliding guide 222 may be formed in a shape in which two ends in a direction parallel to the one direction are closed. The sliding protrusion 310 may move in a direction perpendicular to the one direction (a direction opposite to the Z direction based on the drawing) and may enter the second sliding guide 222 by passing through the guide entrance 222c, and when the sliding protrusion 310 reaches an end, which is opposite to the first guide portion 222a, of the second guide portion 222b, the insertion of the sliding protrusion 310 into the second sliding guide 222 may be completed.

The first guide portion 222a may be formed to allow a width in the direction perpendicular to the one direction to become less toward the direction in which the sliding protrusion 310 is inserted into the second sliding guide 222 in the one direction. The width in the direction perpendicular to the one direction may mean a width in the Y direction based on the drawing. When the sliding protrusion 310 is inserted while moving along the first guide portion 222a, the sliding protrusion 310 may be guided to move toward the approximate center of the second sliding guide 222.

The second guide portion 222a may be formed to allow a width in the direction perpendicular to the one direction to be approximately constant. The width in the direction perpendicular to the one direction may mean a width in the Y direction based on the drawing.

The guide entrance 222c may be formed to allow at least a portion thereof to have a width that is approximately equal to or similar to a maximum width in the Y direction of the first guide portion 222a.

With this configuration, a width of the guide entrance 222c in which the sliding protrusion 310 begins to be inserted may be formed to be greater than an average width of the second sliding guide 222 or a width of an inner portion of the second sliding guide 222. Accordingly, when a user positions the sliding protrusion 310 at the guide entrance 222c to insert the sliding protrusion 310 into the second sliding guide 222, the convenience may be improved.

However, the present disclosure is not limited thereto, and the second sliding guide 222 may be formed to have various shapes for guiding the sliding protrusion 310.

The first sliding guide 221 may be provided in plurality. Similarly, the sliding protrusion 310 corresponding to the first sliding guide 221 may be provided in plurality. The plurality of first sliding guides 221 may be arranged symmetrically with respect to a center line of the coupling portion 220. The center line of the coupling portion 220 means a line located in the middle along the Y direction. However, the number of first sliding guides provided on the stand of the display apparatus according to the present disclosure is not limited thereto.

The second sliding guide 222 may be provided in plurality. Similarly, the sliding protrusion 310 corresponding to the second sliding guide 222 may be provided in plurality. The plurality of second sliding guides 222 may be arranged symmetrically with respect to the center line of the coupling portion 220. The center line of the coupling portion 220 means a line located in the middle along the Y direction. However, the number of second sliding guides provided on the stand of the display apparatus according to the present disclosure is not limited thereto.

The first sliding guide 221 and the second sliding guide 222 described above is merely an example of sliding guides provided to guide the sliding of the sliding protrusion of the base in the stand of the display apparatus according to the present disclosure, and the stand of the display apparatus according to the present disclosure may include various types of sliding guides.

The sliding protrusion 310 may be engaged with the sliding guides 221 and 222 to prevent the base 300 from moving in a direction perpendicular to the one direction relative to the stand body 200 (e.g., Y direction or Z direction) when the sliding protrusion 310 is inserted into the sliding guides 221 and 222.

Particularly, when the sliding protrusion 310 is inserted into the sliding guides 221 and 222, the sliding protrusion 310 may penetrate the sliding guides 221 and 222 in the Z direction, and may be engaged with the sliding guides 221 and 222 in the Z direction while penetrating the sliding guides 221 and 222.

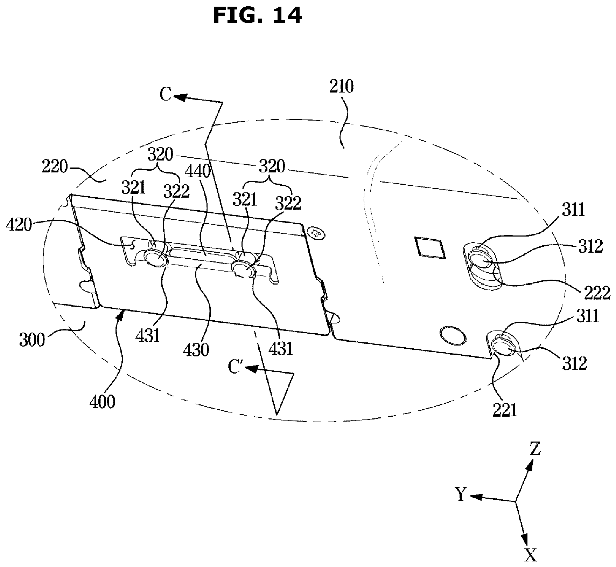

The sliding protrusion 310 may include a body portion 311 (refer to FIG. 14) and a head portion 312. The body portion 311 may extend from the base 300 to penetrate the sliding guides 221 and 222. The head portion 312 may be provided on one side of the body portion 311. Particularly, the head portion 312 may be provided on one side of the body portion 311 with respect to a direction in which the body portion 311 extends from the base 300. As illustrated in FIGS. 5 to 10, the body portion 311 may extend downward from the base 300, and the head portion 312 may be provided on a lower side of the body portion 311.

In order to penetrate the sliding guides 211 and 222, the body portion 311 may be formed to allow a width in a direction perpendicular to the one direction (a width in the Y direction based on the drawing) to be less than or at least the same as that of the sliding guides 221 and 222.

The width of the body portion 311 in the direction perpendicular to the one direction (a width in the Y direction based on the drawing) may be substantially the same as or similar to a width of the second guide portions 221b and 222b in the direction perpendicular to the one direction (a width in the Y direction based on the drawing). With this configuration, when the body portion 311 reaches the second guide portions 221b and 222b, the sliding protrusion 310 may be prevented from moving in a direction opposite to the X direction relative to the sliding guides 221 and 222, and also from moving in the Y direction and the opposite direction thereto. Accordingly, when the sliding protrusion 310 is completely inserted into the sliding guides 221 and 222, the base 300 and the stand body 200 may be fixed so as not to move with respect to each other.

The head portion 312 may be formed to allow a width in the direction perpendicular to the one direction (a width in the Y direction based on the drawing) to be greater than that of the second guide portions 221b and 222b. With this configuration, when the sliding protrusion 310 is in a position inserted into the second guide portions 221b and 222b, the head portion 312 may be engaged with the second guide portions 221b and 222b of the sliding guides 221 and 222. When the sliding protrusion 310 is arranged to penetrate the second guide portion 221b and 222b, the head portion 312 may be restrained from moving in the Z direction by the other surface opposite to one surface, which faces the base 300, of the coupling portion 220.

Meanwhile, in order to allow the sliding protrusion 310 to enter the guide entrance 222c, at least the guide entrance 222c may be provided to allow the width in the direction perpendicular to the one direction (the width in the Y direction based on the drawing) to be greater than the width of the head portion 312 in the direction perpendicular to the one direction.

With the above-mentioned configuration, the base 300 may slide in the one direction relative to the stand body 200, and the base 300 and the stand body 200 may be coupled in a sliding manner.

However, the present disclosure is not limited thereto, and the stand body 200 and the base 300 may include various structures for allowing the base 300 to be coupled to the stand body 200 in a sliding manner. For example, in the stand of the display apparatus according to the present disclosure, a sliding guide provided on the stand body may be formed to have a shape of a groove that is concavely recessed on one surface facing the base. Alternatively, in the stand of the display apparatus according to the present disclosure, a sliding protrusion may be provided on the stand body, and a sliding guide may be provided on the base.

When the sliding connection between the coupling portion 220 and the base 300 is completed, the coupling portion 220 may cover at least a portion of the base 300 from on one side, as illustrated in FIG. 8.

As illustrated in FIG. 8, when the sliding connection between the stand body 200 and the base 300 is completed, the base 300 may be restricted from moving in the Y direction and the opposite direction thereof with respect to the stand body 200. In addition, the base 300 may be restricted from moving in the Z direction and the opposite direction thereof with respect to the stand body 200.

However, in the case as shown in FIG. 8, the base 300 is not restricted from moving in a direction opposite to the one direction, in which the base 300 slides and is coupled to the stand body 200, that is, in the X direction based on the drawing. In such a case, the base 300 may be in a state in which the base 300 is separated from the stand body 200 by sliding relative to the stand body 200 in the X direction due to various causes.

To prevent the difficulty, the stand 100 may include a coupling plate 400. The coupling plate 400 may be provided to restrict the sliding of the base 300 with respect to the stand body 200. When the movement of the base 300 with respect to the stand body 200 in the X direction is restricted by the coupling plate 400, the assembly of the stand body 200 and the base 300 may be completed.

The coupling plate 400 may be provided to be movable between a first position (refer to FIG. 10) that locks the base 300 from sliding in a direction opposite to the one direction relative to the stand body 200, and a second position (refer to FIGS. 8 and 9) that unlocks the sliding of the base 300 in a direction opposite to the one direction relative to the stand body 200.

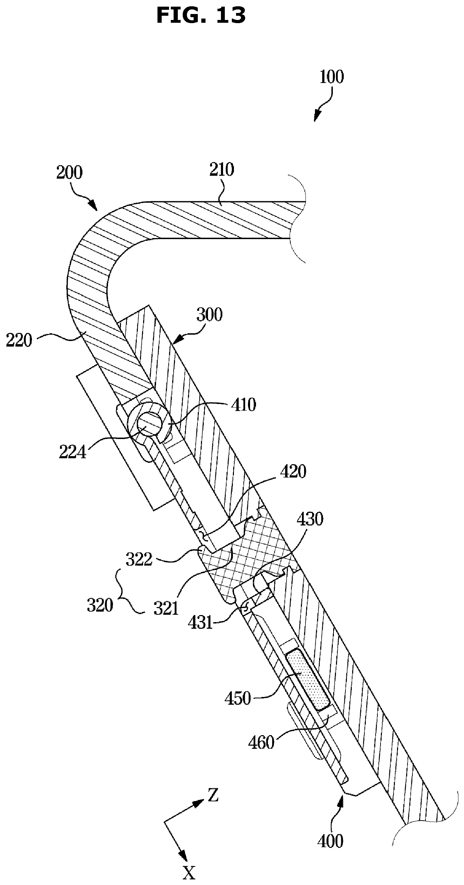

Particularly, the coupling plate 400 may be coupled to the stand body 200 so as to be rotatable between the first position coupled to the base 300 and the second position separated from the base 300. The coupling plate 400 may be provided so as to be rotatable around a rotating shaft 224 (refer to FIG. 13, etc.).

The coupling plate 400 may restrict the sliding of the base 300 relative to the stand body 200 when coupled to the base 300. Particularly, the coupling plate 400 may be provided to restrict the movement of the base 300 in a direction opposite to the one direction relative to the stand body 200 when coupled to the base 300.

The coupling plate 400 may be rotatably coupled to the coupling portion 220. The rotating shaft 224 may be coupled to the coupling portion 220, and the coupling plate 400 may rotate around the rotating shaft 224 coupled to the coupling portion 220. For example, the coupling plate 400 may include a rotating shaft coupling portion 410 coupled to the rotating shaft 224 fixed to the coupling portion 220, and the rotating shaft coupling portion 410 may be coupled to the rotating shaft 224 so as to be rotatable around the rotating shaft 224. The rotating shaft coupling portion 410 may be provided to surround an outer surface of the rotating shaft 224. The rotating shaft coupling portion 410 may be formed to allow an outer surface thereof to have a curved shape.

As illustrated in FIG. 8, the rotating shaft 224 of the coupling plate 400 may extend along a direction (Y direction based on the drawing) that is perpendicular to the one direction and parallel to the base 300. However, the present disclosure is not limited thereto, and the coupling plate 400 may be configured to be rotatable around a rotating shaft extending along the X direction on the drawing.

With this configuration, the coupling plate 400 may be configured to be rotatable between the first position and the second position.

The coupling plate 400 at the first position may cover one side of the base 300. The coupling plate 400 at the first position may cover at least a portion of one side of the base 300. Particularly, one side of the base 300 covered by the coupling plate 400 at the first position may be identical to one side of the base 300 covered by the coupling portion 220. As illustrated in FIG. 8, the coupling portion 220 may cover the lower side of the base 300, and the coupling plate 400 may also cover the lower side of the base 300.

The coupling plate 400 may be formed to have a substantially flat plate shape. The coupling plate 400 may be formed to have a thickness that substantially corresponds to the coupling portion 220.

The coupling portion 220 may include a cut portion 223. The cut portion 223 may be formed by being cut out from the other end opposite to one end connected to the support plate 210 toward the one end. In other words, the cut portion 223 may be formed by being cut out along the one direction from the other end opposite to the support plate 210. A portion of the base 300 corresponding to the cut portion 223 may not be covered by the coupling portion 220.

The coupling plate 400 may be provided to cover a portion of the base 300 corresponding to the cut portion 223 when the coupling plate 400 is at the first position. The coupling plate 400 may be configured to be rotatable with respect to the cut portion 223. The coupling plate 400 may be configured to open and close the cut portion 223 as the coupling plate 400 rotates between the first position and the second position. When the coupling plate 400 is at the second position, a portion of the base 300 corresponding to the cut portion 223 of the coupling portion 220 may be not covered by the coupling plate 400, and when the coupling plate 400 is at the first position, a portion of the base 300 corresponding to the cut portion 223 of the coupling portion 220 may be covered by the coupling plate 400.

The coupling portion 220 may cover a portion of the base 300, and the coupling plate 400 may cover another portion of the base 300 at the first position.

The rotating shaft 224 of the coupling plate 400 may be provided in the cut portion 223. For example, the rotating shaft 224 may be arranged adjacent to one end of the cut portion 223 adjacent to the support plate 210. In other words, the rotating shaft 224 may be arranged adjacent to one end of the cut portion 223 in the one direction (the direction opposite to the X direction based on the drawing). In this case, when the base 300 slides to be coupled to or separated from the coupling portion 220, an engaging portion 320 to be described later may be prevented from interfering with the coupling plate 400. However, the present disclosure is not limited thereto, and the rotating shaft 224 of the coupling plate 400 may be provided in a portion of the coupling portion 220 other than the cut portion 223.

When the stand body 200 and the base 300 are separated from each other, the coupling plate 400 may still be rotatable with respect to the coupling portion 220. At this time, the coupling plate 400 may rotate beyond one side of the cut portion 223 covered by the base 300, which may cause inconvenience to a user.

To prevent this, the coupling plate 400 may include a rotation prevention portion 470, and the coupling plate 400 may include a coupling plate support 223a corresponding to the rotation prevention portion 470.

When the coupling plate 400 is at the first position, the rotation prevention portion 470 may be supported in the Z direction by the coupling plate support 223a, and may prevent the coupling plate 400 from rotating in a direction opposite to the direction in which the coupling plate 400 rotates from the first position to the second position.

The coupling plate 400 may be required to remain fixed at the first position in order to maintain a state in which the sliding of the base 300 relative to the stand body 200 is restricted.

Accordingly, the coupling plate 400 may be arranged to be fixed to the base 300 when the coupling plate 400 is at the first position.

For example, the coupling plate 400 may be provided to be fixed to the base 300 by a magnetic force. The coupling plate 400 may include a magnetic body 450. The base 300 may be configured to have an attractive force due to a magnetic force applied between the base 300 and the magnetic body 450. For example, the base 300 may be provided to include a metal material having magnetism, such as an iron alloy material. The magnetic body 450 may be provided to be fixed to the base 300 by a magnetic force between the magnetic body 450 and the base 300 when the coupling plate 400 is at the first position.

The coupling plate 400 may include a magnetic body holder 460 supporting the magnetic body 450. The magnetic body 450 may be fixed to the magnetic body holder 460. For example, the magnetic body holder 460 may be provided to include a magnetic metal material, such as an iron alloy material, and may be provided to fix the magnetic body 450 by a magnetic force acting between the magnetic body holder 460 and the magnetic body 450. Further, not only the magnetic body holder 460 but also the coupling plate 400 may be provided to include a magnetic metal material as a whole.

With this configuration, the coupling plate 400 may stably maintain a position thereof at the first position, and ultimately effectively restrict the sliding of the base 300 relative to the stand body 200. However, the present disclosure is not limited thereto, and the coupling plate 400 and the base 300 may be provided to include various configurations to allow the coupling plate 400 to be detachably fixed to the base 300 when the coupling plate 400 is at the first position.

Hereinafter an example of a configuration in which the coupling plate 400 is provided to restrict the sliding of the base 300 relative to the stand body 200 at the first position is described in detail.

As illustrated in FIG. 10, when the coupling plate 400 is at the first position, a portion of the base 300 may face a portion of the coupling plate 400 with respect to the one direction, and thus the base 300 may be restricted from moving in the one direction relative to the stand body 200.

Particularly, the base 300 may include the engaging portion 320, and the coupling plate 400 may include a sliding-locking portion 430. The sliding-locking portion 430 may be provided to lock the base 300 from sliding relative to the stand body 200 when the coupling plate 400 is at the first position. The engaging portion 320 may be provided to be engaged with the sliding-locking portion 430 at the first position when the base 300 slides relative to the stand body 200 and the coupling plate 400 at the first position.

When the coupling plate 400 is at the first position, the sliding-locking portion 430 may be positioned on a path along which the engaging portion 320 slides in a direction opposite to the one direction (the X direction based on the drawing). When the coupling plate 400 is at the first position, the sliding-locking portion 430 may be positioned in a direction opposite to the one direction with respect to the engaging portion 320. When the coupling plate 400 is at the first position, the sliding-locking portion 430 may face the engaging portion 320 with respect to a direction parallel to the one direction. When the coupling plate 400 is at the first position, the sliding-locking portion 430 may be positioned at a position at which the sliding-locking portion 430 comes into contact with the engaging portion 320 when the base 300 moves in a direction opposite to the one direction. With this configuration, the sliding-locking portion 430 may be provided to block the engaging portion 320 from sliding in a direction opposite to the one direction with respect to the coupling plate 400 when the coupling plate 400 is at the first position.

The engaging portion 320 may be provided on one surface of the base 300 facing the coupling plate 400. The engaging portion 320 may protrude from one surface of the base 300. That is, the engaging portion 320 may be formed in a protrusion shape protruding from a flat plate shape of the base 300. As shown in FIGS. 5 to 10, the engaging portion 320 may be formed to protrude downward from the lower surface of the base 300.

The engaging portion 320 may protrude from one side of the base 300 and may face the locking portion 430 of the coupling plate 400, which is at the first position, with respect to the one direction.

The coupling plate 400 may include an opening 420. The opening 420 may be formed to be penetrated in an up and down direction based on the coupling plate 400 being at the first position.

The engaging portion 320 of the base 300 may be provided to allow at least a portion of the engaging portion 320 to pass through the opening 420 when the coupling plate 400 is at the first position. When the coupling plate 400 is at the first position, the engaging portion 320 may pass through the opening 420 to allow a portion of the engaging portion 320 to be arranged on the inside of the opening 420, and an edge of the opening 420 may be provided to surround a portion of the engaging portion 320 in a horizontal direction (a direction parallel to the X-Y plane based on the drawing).

At this time, the sliding-locking portion 430 may be provided on the edge of the opening 420. Particularly, the sliding-locking portion 430 may be defined at a portion of the edge of the opening 420 that faces the engaging portion 320 with respect to the one direction when the coupling plate 400 is at the first position. That is, when the coupling plate 400 is at the first position, the engaging portion 320 may pass through the opening 420, and the sliding of the engaging portion 320 may be restricted by the sliding-locking portion 430 provided on the edge of the opening 420. In other words, when the coupling plate 400 is at the first position, the engaging portion 320 may pass through the opening 420 so as to restrict the sliding of the base 300 relative to the coupling plate 400.

The engaging portion 320 may be provided in plurality. The plurality of engaging portions 320 may be arranged symmetrically with respect to the center line of the base 300. The center line of the base 300 means a line located in the middle along the Y direction. However, the number of engaging portions provided on the stand of the display apparatus according to the present disclosure is not limited thereto.

With the above-mentioned configuration, when the coupling plate 400 is at the first position, the coupling plate 400 may restrict the sliding of the base 300 relative to the stand body 200, and the movement of the base 300 relative to the stand body 200 in all directions may be restrained. Accordingly, the stand body 200 and the base 300 may be firmly fixed to each other. The coupling plate 400 may be provided to couple the stand body 200 and the base 300 at the first position. As illustrated in FIG. 10, when the coupling plate 400 is moved from the second position to the first position, the coupling process of the stand body 200 and the base 300 may be completed.

As the description described with reference to FIGS. 5 to 10, the stand 100 for the display apparatus according to one embodiment of the present disclosure may be assembled by coupling the stand body 200 and the base 300 in a sliding manner and then rotating the coupling plate 400 to complete the assembly process of the components. A user can easily perform the assembly process of the stand 100 without using a separate fastening member such as a screw or an assembly tool such as a screw driver during the assembly process of the stand 100. In addition, the stand 100 may be assembled through a simple structure, and thus the components of the stand 100 may be simplified.

However, the configuration of the engaging portion 320 and the sliding-locking portion 430 described above is only an example of a structure in which a coupling plate according to the present disclosure is provided to restrict the sliding of the base 300, and the present disclosure is not limited thereto. For example, unlike FIGS. 5 to 10, an engaging portion in the shape of a groove that is concavely recessed in one surface of the base included in the stand of the display apparatus may be provided, and a sliding-locking portion in the shape of a protrusion that is formed to be inserted into and engaged with the engaging portion may be provided in the coupling plate.

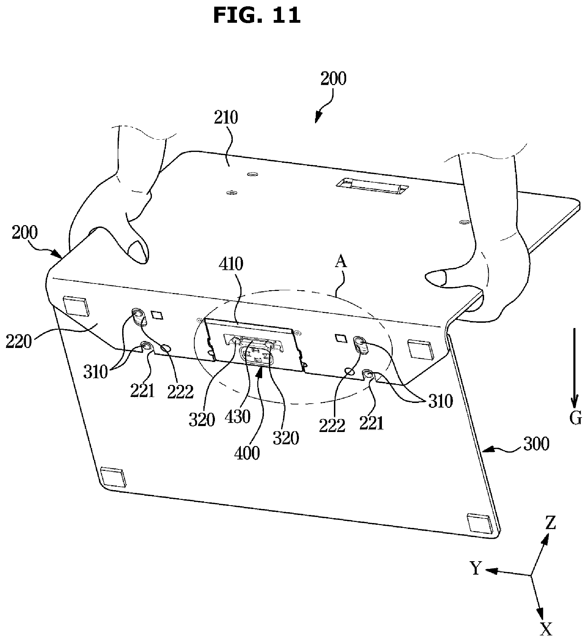

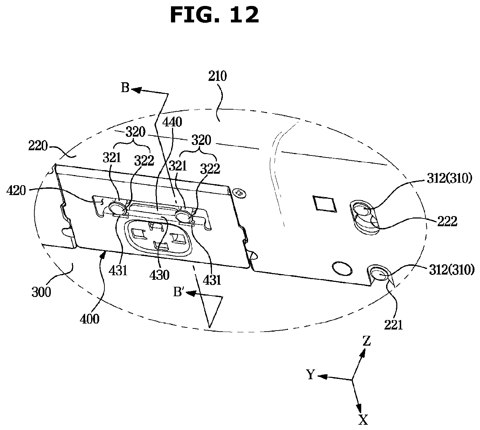

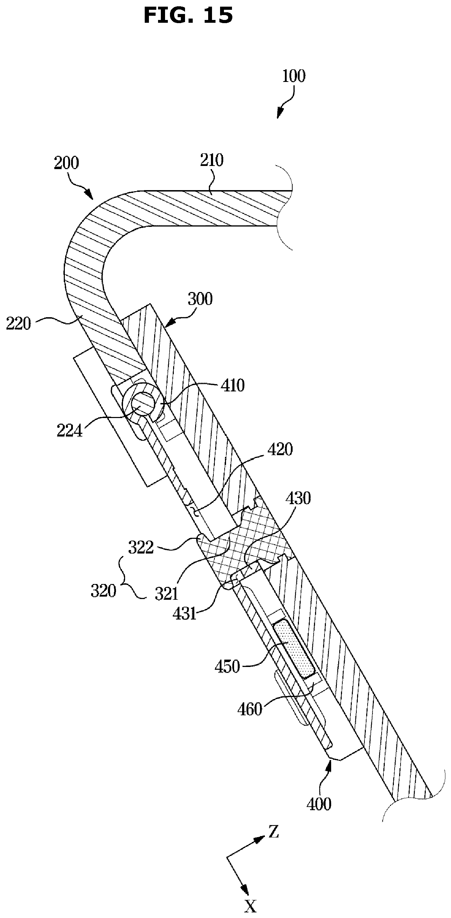

FIG. 11 is a view illustrating a state before the stand is assembled to a display module. FIG. 12 is an enlarged view of part A in FIG 11. FIG. 13 is a cross-sectional view taken along line B-B' of FIG 12. FIG. 14 is a view illustrating a state in which a base is moved relative to a stand body and a coupling plate in the stand of FIG. 12. FIG. 15 is a cross-sectional view taken along line C-C' of FIG 14.

After the assembly process of the stand body 200 and the base 300 is completed, a user can move the stand body 200 and the base 300 to assemble the stand 100 to the display module 10 (or, to assemble the stand body 200 to the support bracket 500 assembled to the display module 10). For example, by holding the support plate 210 of the stand body 200, a user can move the stand body 200 and the base 300, which are assembled to each other, to an installation position of the display apparatus 1.

At this time, the stand body 200 and the base 300 may be positioned as shown in FIGS. 11 to 15 (in FIG. 11, G indicates the direction of gravity). For other reasons, the stand body 200 and the base 300 may be positioned as shown in FIGS. 11 to 15. When the stand body 200 and the base 300 are positioned as shown in FIGS. 11 to 15, an external force may be applied to the base 300 in a direction (the X direction based on the drawing), in which the base 300 is separated from the coupling portion 220, by gravity G, which may not cause a difficulty in general cases because the coupling plate 400 at the first position restricts the movement of the base 300. However, when the coupling plate 400 moves from the first position to the second position due to various causes, the restriction on the movement of the base 300 with respect to the stand body 200 may be released, and the base 300 may be separated from the stand body 200 and fall due to gravity G. This may result in the risk of damage to components of the stand 100, damage to surrounding objects by collision with the fallen base 300, or injury to users and other people nearby.

To ease the difficulty, referring to FIGS. 11 to 15, the coupling plate 400 at the first position may be prevented from moving to the second position under certain conditions. Particularly, the engaging portion 320 of the base 300 may be provided at a certain position to prevent the coupling plate 400 from moving from the first position to the second position.

Particularly, when the coupling plate 400 is at the first position, the base 300 may be configured to slide relative to the coupling plate 400 and the stand body 200 between a locking position (refer to FIGS. 14 and 15) for the coupling plate 400 and an unlocking position (refer to FIGS. 12 and 13) for the coupling plate 400. When the base 300 is at the unlocking position, the coupling plate 400 may be rotatable from the first position to the second position. When the base 300 is at the locking position, the coupling plate 400 may be prevented from rotating from the first position to the second position. In other words, when the base 300 is at the locking position, the base 300 may be provided to restrict the coupling plate 400 from moving from the first position to the second position, and when the base 300 is at the unlocking position, the base 300 may be provided to allow the coupling plate 400 to move from the first position to the second position.

The locking position of the base 300 may be a position in which the base 300 moves in a direction opposite to the one direction (the X direction based on the drawing) from the unlocking position. In other words, the unlocking position of the base 300 may be a position in which the base 300 moves in the one direction (a direction opposite to the X direction based on the drawing) from the locking position. In the process in which the assembly of the base 300 and the stand body 200 is completed by rotating the coupling plate 400 to the first position as illustrated in FIG. 10, the base 300 is usually at the unlocking position. However, when the stand body 200 and the base 300, which are assembled to each other, are positioned as illustrated in FIGS. 11 to 15, the base 300 may slide from the unlocking position as illustrated in FIGS. 12 and 13 to the locking position as illustrated in FIGS. 14 and 15 due to gravity G.

Hereinafter a detailed description is given of an example of a configuration in which the base 300 at the locking position prevents the coupling plate 400 from moving from the first position to the second position.

When the base 300 is at the locking position, the engaging portion 320 of the base 300 may be engaged with the coupling plate 400 to prevent the coupling plate 400 from moving from the first position to the second position.

For example, when the base 300 is at the locking position, the engaging portion 320 may be engaged with the sliding-locking portion 430 of the coupling plate 400. In other words, when the coupling plate 400 is at the first position, the sliding-locking portion 430 may be provide to be engaged with the engaging portion 320 at the locking position. When the base 300 is at the locking position, the sliding-locking portion 430 and the engaging portion 320 may be engaged with each other and thus the coupling plate 400 may not be rotated to the second position. Conversely, when the coupling plate 400 is at the first position, the sliding-locking portion 430 may be provided to be spaced apart in the one direction from the engaging portion 320 at the unlocking position, and the engaging connection between the sliding-locking portion 430 and the engaging portion 320 may be released to allow the coupling plate 400 to be rotated to the second position.

The engaging portion 320 may include a protruding body 321 protruding from one side of the base 300 and a flange portion 322 extending outward from one end of the protruding body 321. The flange portion 322 may be formed to have a wider width in the horizontal direction (in the direction parallel to the X-Y plane based on the drawing) than the protruding body 321.

For example, the protrusion body 321 may be formed to have an approximately cylindrical shape. For example, the flange portion 322 may be formed to have an approximately disc shape. A diameter of the flange portion 322 may be formed to be greater than a diameter of the protrusion body 321.

A portion, which corresponds to a stepped portion of the engaging portion 320 formed as the flange portion 322 extends outward from the protrusion body 321, may be provided to be engaged with the sliding-locking portion 430 when the base 300 is at the locking position.

When the base 300 is at the locking position, the flange portion 322 may be engaged with the sliding-locking portion 430 in a direction different from the one direction. Particularly, when the base 300 is at the locking position, the flange portion 322 and the sliding-locking portion 430 may be engaged with each other in a direction perpendicular to the one direction (the Z direction based on the drawing). When the base 300 is at the locking position, the flange portion 322 and the sliding-locking portion 430 may be in contact with each other in the Z direction.

The coupling plate 400 may further include an engaging groove 431 that is concavely formed to allow at least a portion of the engaging portion 320 to be inserted and engaged when the base 300 is at the locking position. When the coupling plate 400 is at the first position and the base 300 is at the locking position, the engaging groove 431 may be provided to allow at least a portion of the flange portion 322 to be inserted and engaged.

Particularly, the engaging groove 431 may be provided in the sliding-locking portion 430. The engaging groove 431 may be formed by being concavely recessed in the sliding-locking portion 430.

The engaging groove 431, to which the flange portion 322 is inserted, is provided in the coupling plate 400, and thus when the base 300 is at the locking position, the engaging portion 320 may be more stably engaged with the coupling plate 400.

The coupling plate 400 may include an engaging portion guide 440. The engaging portion guide 440 may be provided to guide the engaging portion 320 to be engaged with the coupling plate 400 when the base 300 moves from the unlocking position to the locking position. Particularly, the engaging portion guide 440 may be provided to guide the engaging portion 320 to allow at least a portion of the flange portion 322 to be inserted into the engaging groove 431.

For example, when the coupling plate 400 is at the first position, the coupling plate 400 may be not accurately fixed to the base 300 due to foreign substances placed between the coupling plate 400 and the base 300, or the engaging portion 320 may not be positioned at a position to be engaged with the engaging groove 431 due to an error in the specifications of the components.

For example, when the engaging portion 320 is in a position that is displaced in the Y direction with respect to the coupling plate 400 during the base 300 moves from the unlocking position to the locking position, the engaging portion guide 440 may be in contact with the protrusion body 321 to guide the engaging portion 320 to move to a position in which the engaging portion 320 is engaged with the engaging groove 431.

With this configuration, even when the stand body 200 and the base 300, which are assembled to each other, are positioned as shown in FIGS. 11 to 15, the base 300 may be positioned at the locking position with respect to the coupling plate 400, thereby preventing the coupling plate 400 from moving from the first position to the second position, and preventing that the restriction of the sliding of the base 300 caused by the coupling plate 400 is released.

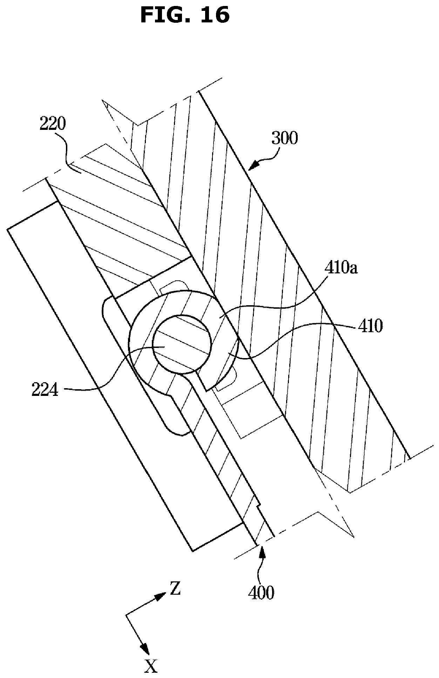

FIG. 16 is an enlarged cross-sectional view of a portion of a stand in a display apparatus according to one embodiment of the present disclosure.

As for describing a stand for a display apparatus according to one embodiment of the present disclosure with reference to FIG. 16, the same reference numerals may be given to the same configurations as those of the embodiments according to FIGS. 1 to 15, and a description thereof may be omitted.

Referring to FIG. 16, a coupling plate 400 of a stand 100 for a display apparatus according to one embodiment of the present disclosure may be coupled to a rotating shaft 224 by including a rotating shaft coupling portion 410 including a flat portion 410a.

The flat portion 410a may be provided on at least a portion of an outer surface of the rotating shaft coupling portion 410. The flat portion 410a may be formed to have a larger radius of curvature than other portions of the rotating shaft coupling portion 410. In other words, the flat portion 410a may be formed as a portion of the outer surface of the rotating shaft coupling portion 410 to have a smaller radius of curvature and to be relatively flat compared to other portions of the outer surface of the rotating shaft coupling portion 410.

Particularly, the flat portion 410a may be provided on a portion of the outer surface of the rotating shaft coupling portion 410 that comes into contact with the base 300 when the coupling plate 400 is at the first position. When the coupling plate 400 is at the first position, the flat portion 410a may come into contact with the base 300.

When the coupling plate 400 is at the first position, the flat portion 410a in contact with the base 300 has a small curvature, and thus a frictional force generated at a contact surface with the base 300 may increase compared to other portions of the rotating shaft coupling portion 410. Accordingly, the coupling plate 400 may be more effectively prevented from unintentionally moving from the first position to the second position due to the frictional force between the flat portion 410a and the base 300.

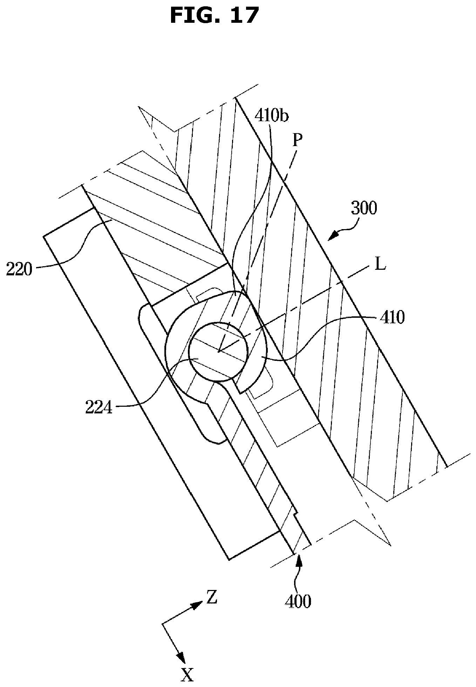

FIG. 17 is an enlarged cross-sectional view of a portion of a stand in the display apparatus according to one embodiment of the present disclosure.

As for describing a stand for a display apparatus according to one embodiment of the present disclosure with reference to FIG. 17, the same reference numerals may be given to the same configurations as those of the embodiments according to FIGS. 1 to 15, and a description thereof may be omitted.

Referring to FIG. 17, a coupling plate 400 of a stand 100 for a display apparatus according to one embodiment of the present disclosure may be coupled to a rotating shaft 224 by including a rotating shaft coupling portion 410 including a rotating shaft protrusion 410b.

The rotating shaft protrusion 410b may be formed to protrude outwardly from the rotating shaft coupling portion 410. A portion of an outer surface of the rotating shaft coupling portion 410, on which the rotating shaft protrusion 410b is provided, may have a longer length from a center of the rotating shaft 224 than another portion of the rotating shaft coupling portion 410.

Particularly, the rotating shaft protrusion 410b may be formed on a portion of the rotating shaft coupling portion 410 that comes into contact with the base 300 when the coupling plate 400 is at the first position. The rotating shaft protrusion 410b may be provided to interfere with the base 300 when the coupling plate 400 rotates from the first position to the second position.

Referring to FIG. 17, when a virtual line L is drawn from the center of the rotating shaft 224 toward the base 300 to be perpendicular to the base 300 while the coupling plate 400 is at the first position, and when other virtual line P is drawn by rotating the virtual line L by a predetermined angle in a direction opposite to the direction in which the coupling plate 400 rotates from the first position to the second position, the rotating shaft protrusion 410b may be formed on the other virtual line P. The rotating shaft protrusion 410b may be formed as a portion of the outer surface of the rotating shaft coupling portion 410 protrudes in the direction of the virtual line P.

With this configuration, the rotating shaft protrusion 410b may interfere with the base 300 when the coupling plate 400 rotates from the first position to the second position, and the coupling plate 400 may be more effectively prevented from unintentionally moving from the first position to the second position.

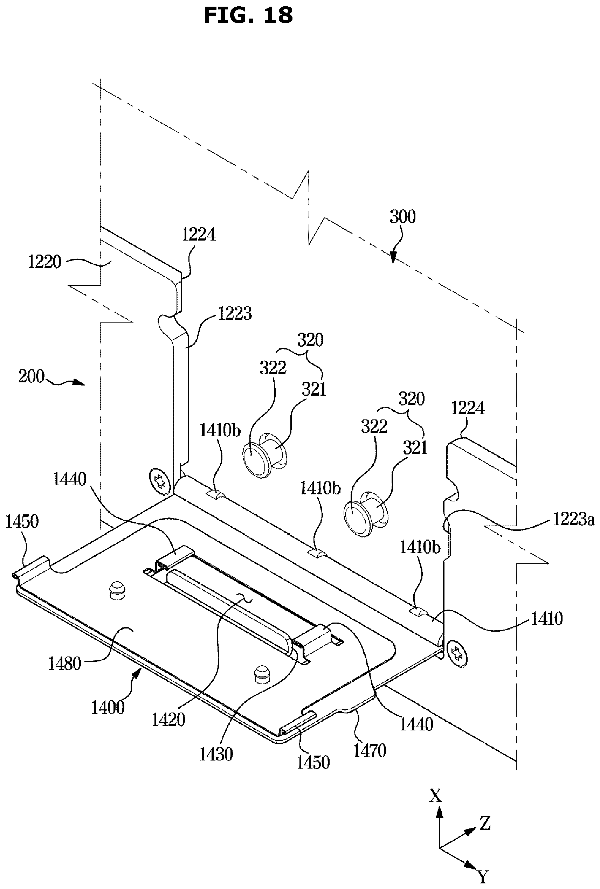

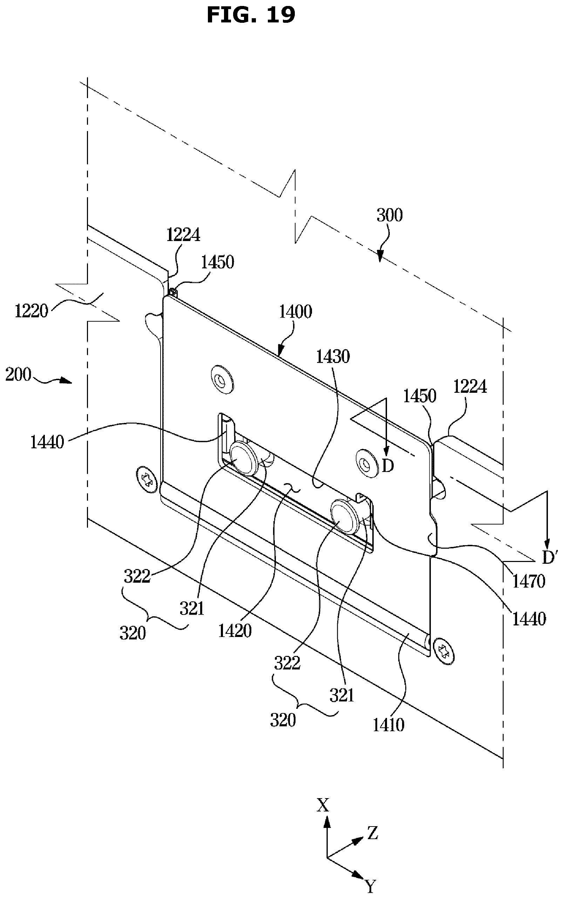

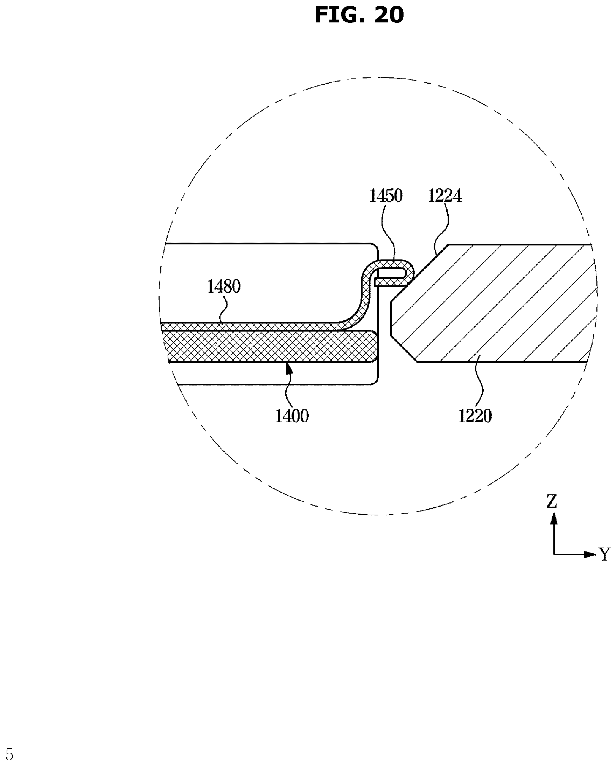

FIG. 18 is an enlarged view of some components of a stand of a display apparatus according to one embodiment of the present disclosure. FIG. 19 is an enlarged view of some components of the stand of the display apparatus according to one embodiment of the present disclosure. FIG 20 is an enlarged cross-sectional view taken along line D-D' of FIG 19.

As for describing a stand for a display apparatus according to one embodiment of the present disclosure with reference to FIGS. 18 to 20, the same reference numerals may be given to the same configurations as those of the embodiments according to FIGS. 1 to 17, and a description thereof may be omitted.

Referring to FIGS. 18 to 20, a stand 100 of a display apparatus 1 according to one embodiment of the present disclosure may include a stand body 200, a base 300, and a coupling plate 1400.

The stand body 200 may include a support plate 210 and a coupling portion 1220. The support plate 210 in the embodiments of FIGS. 18 to 20 may have features corresponding to the support plate 210 in the embodiments of FIGS. 1 to 17, and a detailed description thereof will be omitted below.

The base 300 may be coupled to the stand body 200 in a sliding manner. Particularly, the base 300 may be provided to be movable in a sliding manner with respect to the coupling portion 1220 of the stand body 200, and may be coupled to the coupling portion 1220 by sliding in the one direction (in the direction opposite to the X direction based on the drawing). The base 300 in the embodiments of FIGS. 18 to 20 may have features corresponding to the base 300 in the embodiments of FIGS. 1 to 17, and a detailed description thereof will be omitted below.

In order to allow the base 300 to slide relative to the coupling portion 1220 in the embodiment of FIGS. 18 to 20, the structures of the sliding protrusion 310 and the sliding guides 221 and 222 described with reference to FIGS. 1 to 17 may be provided on the base 300 and the coupling portion 1220 respectively. However, the present disclosure is not limited thereto, and the base 300 may be slidably coupled to the coupling portion 1220 by various structures.

The coupling plate 1400 may be provided to restrict the sliding of the base 300 relative to the coupling portion 1220.

The coupling plate 1400 may be configured to be movable between a first position (refer to FIG. 19) that locks the base 300 from sliding in a direction opposite to the one direction (the X direction based on the drawing) relative to the coupling portion 1200, and a second position (refer to FIG. 18) that unlocks the sliding of the base 300 in a direction opposite to the one direction relative to the coupling portion 1200.

The coupling plate 1400 may be rotatably coupled to the coupling portion 1220. The coupling plate 1400 may rotate around a rotating shaft 224 (the same as in FIG. 13, etc.) coupled to the coupling portion 1220. For example, the coupling plate 1400 may include a rotating shaft coupling portion 1410 coupled to the rotating shaft 224 fixed to the coupling portion 1220, and the rotating shaft coupling portion 1410 may be coupled to the rotating shaft 224 so as to be rotatable around the rotating shaft 224. The rotating shaft coupling portion 1410 may be provided to surround an outer surface of the rotating shaft 224. The rotating shaft coupling portion 1410 may be formed to allow an outer surface thereof to have a curved shape.

FIG. 18 illustrates that the rotating shaft coupling portion 1410 of the coupling plate 1400 includes a rotating shaft protrusion 1410b in the same manner as the embodiment of FIG. 17, but is not limited thereto. The rotating shaft coupling portion 1410 of the coupling plate 1400 may include a flat portion in the same manner as in the embodiment of FIG. 16, or may have a shape with a uniform diameter in the same manner as in the embodiments of FIGS. 5 to 15.

With this configuration, the coupling plate 400 may be configured to be rotatable between the first position and the second position.

The coupling plate 1400 may cover one side of the base 300 at the first position. The coupling plate 1400 may cover at least a portion of one surface of the base 300 at the first position. Particularly, one side of the base 300 covered by the coupling plate 1400 at the first position may be identical to one side of the base 300 covered by the coupling portion 1220. As illustrated in FIGS. 18 to 20, the coupling portion 1220 may cover the lower side of the base 300, and the coupling plate 1400 may also cover the lower side of the base 300.

The coupling portion 1220 may include a cut portion 1223. The coupling plate 1400 may be provided to cover a portion of the base 300 corresponding to the cut portion 1223 when the coupling plate 1400 is at the first position. The coupling plate 1400 may be configured to be rotatable with respect to the cut portion 1223. The coupling plate 1400 may be configured to open and close the cut portion 1223 as the coupling plate 1400 rotates between the first position and the second position. When the coupling plate 1400 is at the second position, a portion of the base 300 corresponding to the cut portion 1223 of the coupling portion 1220 may be not covered by the coupling plate 1400, and when the coupling plate 1400 is at the first position, a portion of the base 300 corresponding to the cut portion 1223 of the coupling portion 1220 may be covered by the coupling plate 1400.

The coupling portion 1220 may cover a portion of the base 300, and the coupling plate 1400 may cover another portion of the base 300 at the first position.

The rotating shaft 224 of the coupling plate 1400 may be provided in the cut portion 1223.

The coupling plate 1400 may include a rotation prevention portion 1470, and the coupling plate 400 may include a coupling plate support 1223a corresponding to the rotation prevention portion 1470. When the coupling plate 1400 is at the first position, the rotation prevention portion 1470 may be supported in the Z direction by the coupling plate support 1223a, and may prevent the coupling plate 1400 from rotating in a direction opposite to the direction in which the coupling plate 1400 rotates from the first position to the second position.

FIGS. 18 and 19 illustrate that the rotation prevention portion 1470 is provided on only one side of the coupling plate 1400 and, similarly, the coupling plate 1223a is provided on only one side of the cut portion 1223. However, the present disclosure is not limited thereto, and as illustrated in FIGS. 5 to 15, the rotation prevention portion 1470 may be provided on both sides of the coupling plate 1400, and correspondingly, the coupling plate 1223a may be provided on both sides of the cut portion 1223.

The base 300 may include an engaging portion 320, and the coupling plate 1400 may include a sliding-locking portion 1430. The sliding-locking portion 1430 may be provided to lock the base 300 from sliding relative to the coupling portion 1220 of the stand body 200 when the coupling plate 1400 is at the first position. The engaging portion 320 may be provided to be engaged with the sliding-locking portion 1430 at the first position when the base 300 slides relative to the coupling portion 1220 of the stand body 200 and the coupling plate 1400 at the first position.

When the coupling plate 1400 is at the first position, the sliding-locking portion 1430 may be positioned in a direction opposite to the one direction (the X direction based on the drawing) with respect to the engaging portion 320. When the coupling plate 1400 is at the first position, the sliding-locking portion 1430 may face the engaging portion 320 in a direction parallel to the one direction. When the coupling plate 1400 is at the first position, the sliding-locking portion 1430 may be positioned at a position at which the sliding-locking portion 1430 comes into contact with the engaging portion 320 when the base 300 moves in a direction opposite to the one direction. With this configuration, the sliding-locking portion 1430 may be provided to block the engaging portion 320 from sliding in a direction opposite to the one direction with respect to the coupling plate 1400 when the coupling plate 1400 is at the first position.

The coupling plate 1400 may include an opening 1420. The opening 1420 may be formed to be penetrated in the up and down direction based on the coupling plate 1400 being at the first position.

The engaging portion 320 of the base 300 may be provided to allow at least a portion of the engaging portion 320 to pass through the opening 1420 when the coupling plate 1400 is at the first position. When the coupling plate 1400 is at the first position, the engaging portion 320 may pass through the opening 1420 to allow a portion of the engaging portion 320 to be arranged on the inside of the opening 1420, and an edge of the opening 1420 may be provided so as to surround a portion of the engaging portion 320 in the horizontal direction (a direction parallel to the X-Y plane based on the drawing).

At this time, the sliding-locking portion 1430 may be provided on the edge of the opening 1420. Particularly, the sliding-locking portion 1430 may be defined at a portion of the edge of the opening 1420 that faces the engaging portion 320 with respect to the one direction when the coupling plate 1400 is at the first position. That is, when the coupling plate 1400 is at the first position, the engaging portion 320 may pass through the opening 1420, and the sliding of the engaging portion 320 may be restricted by the sliding-locking portion 1430 provided on the edge of the opening 1420. In other words, when the coupling plate 1400 is at the first position, the engaging portion 320 may pass through the opening 1420 so as to restrict the sliding of the base 300 relative to the coupling plate 1400.

The coupling plate 1400 may be required to remain fixed at the first position in order to maintain a state in which the sliding of the base 300 with respect to the coupling portion 1220 of the stand body 200 is restricted.

As illustrated in FIGS. 18 to 20, the coupling plate 1400 may be provided to be fixed to the coupling portion 1220 of the stand body 200 when the coupling plate 1400 is at the first position. The coupling plate 1400 may be configured to be movable between the first position fixed to the coupling portion 1220 and the second position separated from the coupling portion 1220.

Particularly, the coupling plate 1400 may be provided to be engaged and fixed to the coupling portion 1220. The coupling plate 1400 may be engaged with the coupling portion 1220 at the first position. The coupling plate 1400 may be moved to the second position by releasing the engaging connection to the coupling portion 1220. When the coupling plate 1400 is engaged with the coupling portion 1220, the sliding of the base 300 with respect to the coupling portion 1220 may be restricted. When the coupling plate 1400 is engaged with the coupling portion 1220, the engaging portion 320 and the sliding-locking portion 1430 may face each other in the one direction. When the coupling plate 1400 is engaged with the coupling portion 1220, the engaging portion 320 may penetrate the opening 1420 of the coupling plate 1400.

The coupling plate 1400 may be rotatably connected to the rotating shaft 224 on one side, and engaged with the coupling portion 1220 on the other side opposite to the side connected to the rotating shaft 224.

The coupling plate 1400 may include a hook 1450 provided to be engaged with the coupling portion 1220. The hook 1450 may be positioned adjacent to the edge of the coupling plate 1400. Particularly, the hook 1450 may be positioned adjacent to an edge, which is adjacent to the cut portion 1223, of the coupling plate 1400.

The coupling portion 1220 may include an insertion groove 1224 into which at least a portion of the hook 1450 is inserted to prevent the rotation of the coupling plate 1400. The insertion groove 1224 may be arranged at a position corresponding to the hook 1450. The insertion groove 1224 may be arranged on the edge of the cut portion 1223. Particularly, the insertion groove 1224 may be arranged at a position corresponding to the hook 1450 on the edge of the cut portion 1223.

The insertion groove 1224 may be formed to be concavely recessed one surface of the cut portion 1223 to allow at least a portion of the hook 1450 to be inserted thereinto. Particularly, when the coupling plate 1400 is at the first position, the insertion groove 1224 may be provided to cover at least a portion of the hook 1450 inserted into the insertion groove 1224 from one side. Particularly, when the coupling plate 1400 is at the first position, the insertion groove 1224 may be provided to cover at least a portion of the hook 1450 from the lower side (in a direction opposite to the Z direction based on the drawing).

When the coupling plate 1400 is at the first position, the hook 1450 may be inserted into the insertion groove 1224 and engaged with the coupling portion 1220, thereby preventing the coupling plate 1400 from rotating from the first position to the second position.

When the coupling plate 1400 is at the first position, the base 300 may be configured to slide relative to the coupling plate 1400 and the coupling portion 1220 between a locking position relative to the coupling plate 1400 and an unlocking position relative to the coupling plate 1400. When the base 300 is at the unlocking position, the coupling plate 1400 may be rotatable from the first position to the second position. When the base 300 is at the locking position, the coupling plate 1400 may be prevented from rotating from the first position to the second position.

An example in which the base 300 moves between the locking position and the unlocking position is the same as the description described with reference to FIG. 11, etc.

When the base 300 is at the locking position, the engaging portion 320 of the base 300 may be engaged with the coupling plate 1400 to prevent the coupling plate 1400 from moving from the first position to the second position.

When the base 300 is at the locking position, the flange portion 322 may be engaged with the sliding locking portion 1430 in a direction different from the one direction. Particularly, when the base 300 is at the locking position, the flange portion 322 and the sliding locking portion 1430 may be engaged with each other in a direction perpendicular to the one direction (the Z direction based on the drawing). When the base 300 is at the locking position, the flange portion 322 and the sliding locking portion 1430 may be in contact with each other in the Z direction. A portion, which corresponds to a stepped portion of the engaging portion 320 that is formed as the flange portion 322 extends outwardly from the protrusion body 321, may be provided to be engaged with the sliding locking portion 1430 in the Z direction when the base 300 is at the locking position.

However, unlike the above-mentioned description, depending on a length of the protrusion body 321 of the engaging portion 320 protruding in the Z direction, a thickness of the flange portion 322 in the Z direction, and a thickness of a portion, which is adjacent to the sliding locking portion 1430, of the engaging plate 400, the engaging portion 320 may not perform a function in which the engaging portion 320 is engaged with the sliding-locking portion 1430 at the locking position so as to prevent the rotation of the coupling plate 1400.

Alternatively, a configuration corresponding to the engaging groove 431 described with reference to FIGS. 5 to 15, etc. but not shown in FIGS. 18 to 20, may be provided in the sliding locking portion 1430 of FIGS. 18 to 20.

The coupling plate 1400 may include an engaging portion guide 1440. The engaging portion guide 1440 may be provided to guide the engaging portion 320 to be engaged with the coupling plate 1400 when the base 300 moves from the unlocking position to the locking position.

For example, when the engaging portion 320 is in a position that is displaced in the Y direction with respect to the coupling plate 1400 during the base 300 moves from the unlocking position to the locking position, the engaging portion guide 1440 may be in contact with the protrusion body 321 so as to guide the engaging portion 320 to move to a position in which the engaging portion 320 is engaged with the sliding locking portion 1430.

FIGS. 18 to 20 illustrate an example in which the plurality of engaging portion guides 1440 is provided and the plurality of engaging portion guides 1440 is configured to guide the plurality of engaging portions 320, respectively. However, the present disclosure is not limited thereto, and as illustrated in FIGS. 5 to 15, a single engaging portion guide 1440 may be provided so as to guide the plurality of engaging portions 320, simultaneously.

The coupling plate 1400 may include an inner surface plate 1480 disposed on an inner surface of the coupling plate 1400 facing the base 300 at the first position.

The configuration such as the hook 1450 and the engaging portion guide 1440 of the coupling plate 1400 may be formed integrally with the inner surface plate 1480. In this case, manufacturing convenience may be improved. However, the present disclosure is not limited thereto, and each component of the coupling plate 1400, such as the hook 1450 and the engaging portion guide 1440 may be formed separately from each other. Alternatively, all components of the coupling plate 1400 may be formed integrally.

With the configuration described above with reference to FIGS. 1 to 20, the display apparatus 1 according to one embodiment of the present disclosure may stably support the display module 10 using the stand 100. The stand 100 may be provided in such a way that the stand body 200 and the base 300 are coupled to each other in a sliding manner and thus the convenience of assembly may be improved. In addition, as the stand 100 includes the coupling plate 400 or 1400, the stand body 200 and the base 300 may be coupled more stably, and a user can easily fix the stand body 200 and the base 300 using the coupling plate 400 or 1400 without using a separate fastening member or assembly tool.

However, the present disclosure is not limited to the embodiments described with reference to FIGS. 1 to 20.

For example, unlike FIGS. 1 to 20, the base of the stand may be coupled to the lower side of the coupling portion of the stand body. That is, the coupling portion of the stand body may cover the upper side of the base.

For example, in FIGS. 1 to 20, the description is illustrated based on the assumption that the stand body 200 has an overall bent shape as the support plate 210 and the coupling portion 220 or 1220 are connected at a predetermined angle, and the base 300 has an overall flat plate shape. Alternatively, the base of the stand may have an overall bent shape, and the stand body connected thereto may have an overall flat plate shape.

For example, unlike FIGS. 1 to 20, the coupling plate of the stand may be rotatably coupled to the base rather than the stand body. The coupling plate may be configured to be rotatable between a first position in which the coupling plate is coupled to the base to restrict the sliding, and a second position rotated from the first position. In this case, a cut portion opened and closed by the coupling plate may be formed in the base.

In addition, unlike FIGS. 1 to 20, the coupling plate may be provided as a separate configuration separated from the stand body and the base, respectively. In this case, the coupling plate may be provided to restrict the sliding of the base with respect to the stand body at a first position in which the coupling plate is simultaneously fixed to the stand body and the base, and to allow the sliding of the base with respect to the stand body at a second position in which the coupling plate is simultaneously separated from the stand body and the base. The coupling plate may be removably coupled to the stand body and the base, respectively, by various methods, such as coupling using a magnetic body or engaging using a hook.

While the present disclosure has been particularly described with reference to exemplary embodiments, it should be understood by those of skilled in the art that various changes in form and details may be made without departing from the spirit and scope of the present disclosure.

## Claims

1. A stand for a display apparatus comprising:
a stand body configured to be coupled to a display module;
a base configured to be coupled to or separated from the stand body by sliding relative to the stand body and provided to support the stand body and the display module; and
a coupling plate provided in the stand body so as to be rotatable between a first position, at which the coupling plate is coupled to the base, and a second position, at which the coupling plate is separated from the base, and configured to restrict the sliding of the base relative to the stand body in response to the coupling plate being at the first position.

2. The stand for the display apparatus of claim 1, wherein
the base is configured to be coupled to the stand body by sliding in one direction relative to the stand body and configured to be separated from the stand body by sliding in another direction opposite to the one direction relative to the stand body, and
wherein the coupling plate is configured to restrict a movement of the base in the another direction relative to the stand body in response to the coupling plate being at the first position.

3. The stand for the display apparatus of claim 2, wherein
the base comprises: an engaging portion provided on one surface of the base facing the coupling plate, and
wherein the coupling plate comprises a sliding-locking portion disposed on a path, along which the engaging portion slides to the another direction, so as to block the engaging portion from sliding in the another direction relative to the coupling plate in response to the coupling plate being at the first position.

4. The stand for the display apparatus of claim 3, wherein
the coupling plate comprises: an opening,
wherein the sliding-locking portion is disposed on an edge of the opening, and
wherein the engaging portion protrudes from the one surface of the base and is provided to allow at least a portion thereof to penetrate the opening in response to the coupling plate being at the first position.

5. The stand for the display apparatus of claim 3, wherein
in response to the coupling plate being at the first position, the base is configured to slide relative to the coupling plate and the stand body between a locking position that restricts a movement of the coupling plate from the first position to the second position and an unlocking position that allows the movement of the coupling plate from the first position to the second position, and
wherein the engaging portion is engaged with the coupling plate at the locking position.

6. The stand for the display apparatus of claim 5, wherein
in response to the coupling plate being at the first position, the sliding-locking portion is configured to be engaged with the engaging portion at the locking position and configured to be spaced apart in the one direction from the engaging portion at the unlocking position.

7. The stand for the display apparatus of claim 6, wherein
the engaging portion comprises:
a protrusion body protruding from one side of the base; and a flange portion extending outward from one end of the protrusion body,
wherein the flange portion has a diameter greater than a diameter of the protrusion body, and
wherein the flange portion at the locking position is engaged with the sliding-locking portion at the first position in a direction different from the one direction.

8. The stand for the display apparatus of claim 7, wherein
the coupling plate further comprises an engaging groove provided to allow at least a portion of the flange portion to be inserted and engaged at the locking position in response to the coupling plate being at the first position, and
wherein the engaging groove is formed by being concavely recessed in the sliding-locking portion.

9. The stand for the display apparatus of claim 1, wherein
the base is configured to be coupled to the stand body by sliding in one direction relative to the stand body,
wherein the stand body comprises: a sliding guide provided to guide the sliding of the base relative to the stand body,
wherein the base comprises: a sliding protrusion formed by protruding from one side of the base, and
wherein the sliding protrusion is configured to be insertable into the sliding guide along the one direction.

10. The stand for the display apparatus of claim 9, wherein
the sliding protrusion is engaged with the sliding guide to prevent the base from moving in a direction perpendicular to the one direction relative to the stand body in response to the sliding protrusion being inserted into the sliding guide.

11. The stand for the display apparatus of claim 9, wherein
the sliding guide comprises:
a first guide portion in which a width thereof in a direction perpendicular to the one direction becomes less toward a direction in which the sliding protrusion is inserted into the sliding guide in the one direction; and
a second guide portion extending from the first guide portion to the direction in which the sliding protrusion is inserted in the one direction and having a constant width in the direction perpendicular to the one direction.

12. The stand for the display apparatus of claim 11, wherein
the sliding protrusion comprises: a body portion extending from the base to penetrate the sliding guide; and a head portion provided on one side of the body portion in a direction extending from the base,
wherein the head portion has a width wider than the second guide portion in the direction perpendicular to the one direction.

13. The stand for the display apparatus of claim 1, wherein
the coupling plate comprises: a magnetic body, and
wherein the magnetic body is provided to allow the coupling plate to be fixed to the base by magnetic force between the magnetic body and the base in response to the coupling plate being at the first position.

14. The stand for the display apparatus of claim 1, wherein
the stand body comprises: a coupling portion configured to be coupled to the base, and
wherein the coupling plate is rotatably coupled to the coupling portion.

15. The stand for the display apparatus of claim 14, wherein
the coupling portion covers a portion of the base, and
wherein the coupling plate covers another portion of the base in response to the coupling plate being at the first position.
